# EUROPEAN PATENT SPECIFICATION

(11) **EP 4 562 246 B1**
(45) Date of publication and mention of the grant of the patent: **30.09.2026**
(21) Application number: 23745588.6
(22) Date of filing: 28.07.2023
(51) Int. Cl.: E01H 1/12

(54) **POOPER SCOOPER DEVICE**
PAUERSCHAUFELVORRICHTUNG
DISPOSITIF DE RAMASSAGE DE CROTTE

(30) Priority: 28.07.2022 GB 202211021; 24.03.2023 WO PCT/EP2023/057692
(43) Date of publication of application: 04.06.2025
(73) Proprietor: O'Rourke, Hugh, Birr, Co. Offaly (IE)
(72) Inventor: O'Rourke, Hugh, Birr, Co. Offaly (IE)
(74) Representative: FRKelly
(86) International application number: PCT/EP2023/071079
(87) International publication number: WO 2024/023339

(56) References cited:
- WO-A1-02/09503
- WO-A1-2008/014758
- WO-A1-2009/128863
- WO-A1-2017/098498
- FR-A1- 2 818 673
- GB-A- 2 556 087
- US-A- 4 148 510

## Description

### Field of the Invention

The present invention relates to an animal waste collection device, specifically a pooper scooper device, for bagging faeces in a collection bag.

### Background to the Invention

The presence of animal faeces in public areas, such as on footpaths, roads, neighbourhoods and public parks is unsightly and unsanitary. Many communities have enacted regulations or laws requiring pet owners to take responsibility for their pets, and in particular, to remove any faeces deposited by their pets and to dispose of it appropriately and in a sanitary manner. Failure to comply with such regulations or infringement of such laws can result in the pet owner being penalised, typically with a fine.

A number of devices have been invented and marketed to address this issue. In general, these devices are designed to collect, transport and dispose of the pet faeces in a nearby bin. These devices are commonly referred to as pooper scooper devices.

The simplest faeces collection method involves using small plastic disposable bags, which a pet owner employs to pick up the faeces. The pet owner simply places their hand in one such bag, thereby employing said bag as a protective glove, before manually picking up the faeces, turning the bag inside out to hold the faeces within the bag, closing the bag and then disposing of same.

While this method advantageously, does not significantly burden the owner with an additional awkward, unsightly piece of equipment to carry, there is a significant psychological drawback with this methodology, as the owner indirectly feels the texture, and warmth of the faeces, which is unpleasant and embarrassing. Furthermore, an unobserved perforation in a collection bag, exposes the responsible pet owner directly to contamination by the faeces, which is unsanitary, and may cause infection such as bacterial infection or parasitic infection.

Pooper scooper devices of various shapes and sizes have been developed, to distance the device user from the faeces, while also enabling effective removal and disposal of said faeces. A drawback associated with many of these devices is that during use, they become soiled and thus must be disposed, carried after use and may have to be washed after each use.

Some devices comprise a long handle with a scoop at the end of said handle, with which the user scoops up the faeces or employs another object such as rake or other suitable device to push the faeces into the scoop.

US Patent No. 6,196,600 describes a pooper scooper comprising a scooping tray, pivotally attached to a handle, the tray comprises a waste exiting window through which the animal faeces can drop into a disposable bag, when the tray is tilted upwards. The front end of the tray comprises forks which enable the user to collect animal waste in deep grass or weeded areas.

US Patent No. 8,550,512 describes an alternative device which in use is employed to capture the pet faeces during the defecation process. The device comprises an elongated foldable pole, a releasable locking mechanism, and a pivotable waste collecting assembly adapted to hold a bag open to catch pet droppings during defecation. The collection assembly comprises a facility for automatically closing the bag into which the faeces has been deposited by the pet, by pulling a drawstring on the bag, thereby closing the bag. The closed bag containing the faeces, can then be disposed of appropriately by the operator.

A plethora of alternative pooper scooper devices have been designed and marketed, which comprise a long handle and scooping device configuration. A significant disadvantage of such devices, is the inconvenience and awkwardness to the user of having to carry said devices with an inability to do so discretely.

In order to address this drawback, several smaller devices have been developed.

US Patent Publication No. 2009315349 describes a pooper scooper device comprising a collection bag having a waste removal tool, attached to the closed bottom of said bag. The waste removal tool includes a pair of jaws which can be moved from an open position to a closed position. The user employs the device in a grabbing action to scoop up the faeces into the waste removal tool. The entire tool and bag are then disposed of. In a further embodiment, the device is placed inside the bag, such that the waste removal tool is not in direct contact with the faeces. The jaws of the device terminate in a blade portion, designed to urge the faeces into the bag. The user's hand is no longer required for manual pick up and thus a user is protected from the unpleasant tactile experience, described above, which is associated with employing only a bag as a protective glove, when manually picking up animal faeces.

US Patent Publication No. 2009072558 similarly describes a disposable pooper scooper device. The device includes a plastic bag with handles attached to a cardboard shovel blade. The plastic bag is open at the end opposite the shovel blade. The open end of the bag is partially turned inside-out as it slips over the operator's hand and up the wrist and forearm. Once the animal waste is shovelled up, in a grabbing action between opposing blades, the bag is pulled completely inside out over the mouth of the shovel completely encapsulating the blade and faeces. The open end of the bag can then be tied off and the bag disposed of.

US Patent No. 5,725,268 similarly describes a pooper scooper comprising a tray attached to the closed end of a bag, which device comprises two opposing sidewalls which are employed to shovel up faecal deposits using a grabbing action. The bag is then peeled over the device and the entire device, comprising the faeces is disposed of.

US Patent Publication No. 2014152031 describes a pooper scooper device comprising a handle for storing a plurality of disposable bags, a stem extending from the handle and including a bore for receiving the bags and a plurality of pivotable fingers that are pivotally movable relative to the stem. A disposable bag is pulled through the bore of the stem and the open end of the bag is pulled beyond and folded over the fingers. The operator can actuate an actuating mechanism that operates to pivot the fingers between closed and open positions. The device scoops up the faeces into the bag using a grabbing action. The bag comprising the faeces is then tied off and disposed of by the operator. A disadvantage associated with the device of US2014152031 is the abundance of component parts, including many moving parts, the expense associated with manufacturing the device, and the size of the device is such that it is too large for the operator to carry discretely.

US Patent No. 7,216,905 describes a disposable pooper scooper device comprising a claw mechanism including a first set of arcuately formed finger members and a second opposing set of arcuately formed finger members; the first and second sets of arcuately formed finger members are offset from each other in a longitudinal direction. The device is similar in appearance to a hair claw. A bag is attached to the claw mechanism. The operator whose hand is inserted into the bag, operates a pair of actuating members which provide actuation of the arcuately formed finger members between an open and closed position. The arcuately formed fingers are employed to scoop up the faeces in a grabbing action, the bag is peeled over the claw mechanism comprising the faeces, and the bag is tied off and disposed of by the operator.

US Patent No. 5,564,763 discloses a similar device to US'905. The device comprises elongate spaced arcuate fingers formed into two clamshell members. The elongate fingers are designed to dig into grass and soil for easier and more complete collection of faeces through a raking effect.

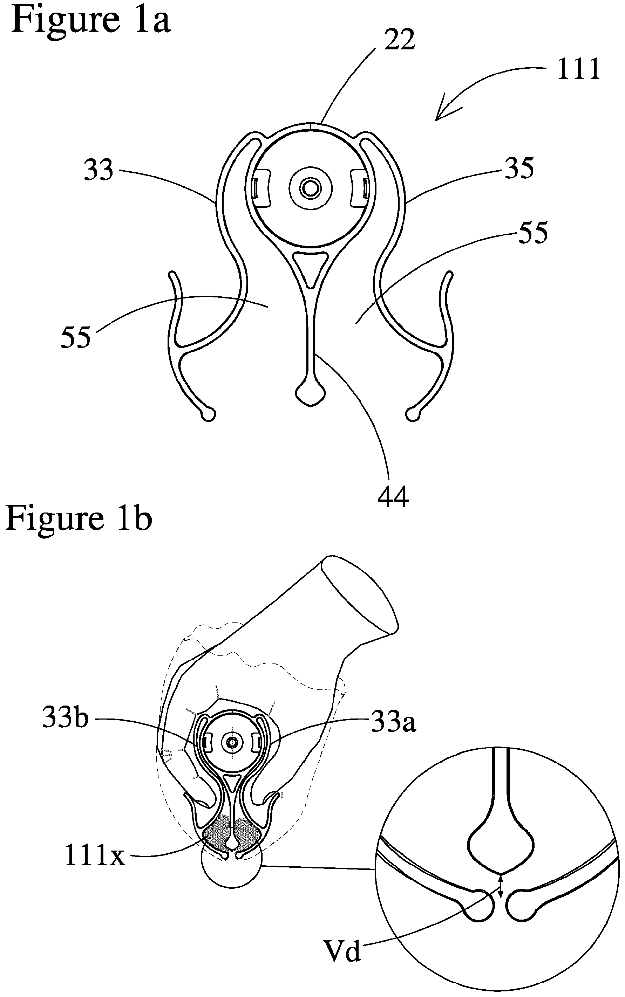

**International Patent application publication no.** WO0005458 discloses a two-halved jawed scooper for collecting and retaining animal excrement stools from the ground, comprising a first arm and a second arm opposed and connected one to the other under bias to define a bag-receiving chamber and having handle portions defining manually grippable handle means to effect operable displacement of said first arm relative to said second arm against said bias and terminal portions defining jaw means; and bag-retaining means for retaining a flexible bag for use within said chamber. The two-halved jawed scooper form a collection chamber when biased towards each other in a closed position, the collection chamber is a substantially elliptical cylinder. **Figure** 1 shows a clip 60 which houses a roll of collection bags on an outer surface member 16 which constitutes one of the two-halves of the pooper scooper.

Many of the aforementioned smaller devices, which essentially consist of a shovelling element having a grabbing action, and a disposable bag, are less effective, when the faeces is comparatively large, or less solid. Collection of faeces that is particularly soft or has a runny consistency is problematic for many pooper scooper devices, and indeed for the hand-in-bag collection approach.

US Patent No. 10,738,428 discloses a pooper scooper device comprising (a) a base part, (b) two opposing leaves on the base part, (c) at least one intermediate leaf disposed between the opposing leaves, and a pair of actuating members coupled to said opposing leaves for reversibly displacing said opposing leaves from a first position to a second position, wherein the two opposing leaves and the at least one intermediate leaf are formed in a spaced apart manner, said at least one intermediate leaf extending downwardly from the base part, and wherein the at least one intermediate leaf or leaves define channels between the opposing leaves, such that a bag may be interposed between the opposing leaves in the channels, so that when the device is pressed down onto faeces a part of said bag and the faeces are forced into and lodge in said channels between the opposing leaves and the at least one intermediate leaf The base part may comprise a housing for storing a plurality of disposable bags. Also disclosed is a dog leash housing comprising: a body; a handle; and engaging means for securing a dog leash to said housing, said body comprising a holder for a pooper scooper device, said holder comprising: a chamber and retaining means for retaining a pooper scooper device at least partially within the chamber such that faeces engaging elements of the pooper scooper device are housed within the chamber and a handle of the pooper scooper device remains at least partially outside the chamber; and said pooper scooper device comprising: a base part, two opposing leaves on the base part, at least one intermediate leaf disposed between the opposing leaves, wherein the two opposing leaves and the at least one intermediate leaf are formed in a spaced apart manner, said at least one intermediate leaf extending downwardly from the base part, and wherein the at least one intermediate leaf or leaves define channels between the opposing leaves, such that a bag may be interposed between the opposing leaves in the channels, so that when the device is pressed down onto faeces a part of said bag and the faeces are forced into and lodge in said channels between the opposing leaves and the at least one intermediate leaf.

UK Design no. 6161551 discloses a pooper scooper device comprising a housing for storing a roll of collection bags, with two opposing leaves extending from the housing, and a single intermediate leaf defining channels between the opposing leaves. The device includes a pair of actuating members coupled to said opposing leaves for reversibly displacing said opposing leaves from a first position to a second position.

**International Patent application publication no.** WO2009/128863 discloses a grappling device for animal excreta comprising a pair of jaws that are pivotally mounted to a pin member and biased by spring members to a closed position. The pin member carries a roll of plastic container bags. The jaws are described as a first body and a second body each of which comprises an open region which is bounded by sidewalls having lateral edges orthogonal to a horizontal axis. Lateral edges of a sidewall of the first body contain saw tooth projections which mesh with matching saw tooth indentations in the lateral edge of a sidewall of the second body when the first body and the second body are in the closed position (as shown in Figure 1). The two-dimensional saw tooth projections and corresponding saw tooth indentations facilitate easier tearing of a bag from a roll of bags.

**French Patent Application no.** FR2818673A1 discloses a pooper scooper device comprising two symmetrical hinged shells, internally lined with a sleeve made of plastic exactly matching the internal shape of the two shells which forms a plastic flexible jacket inside the shells. Edges of the plastic sleeve/sheet are lined with strips of double-sided adhesive, the outer sides of which are protected with a release liner. Prior to collection of a faecal deposit the release liners are removed from the edges of the plastic sheet, and the shells are used as limbs of tongs to collect the faecal deposit from the ground. The strips of adhesive bound to the plastic sheet lining a first shell adhere to corresponding strips of adhesive the plastic sheet lining the second shell when the shells are closed, thereby forming a pouch from the plastic sheet lining the inside of the shells. The plastic sheet may have an outer extension on each side of the shells, which enables the formation of a zip-lock closure on the bag, through manual manipulation of the zip-lock connection. The faecal deposit enclosed in the zip-locked bag, may be disposed of in the nearest trash can, at the convenience of the operator. Thus, the reusable pooper scooper device requires specialised plastic sheeting, comprising double sided adhesive strips in order to function. A disposable pooper scooper device is also described, which may be made of cardboard, and whose edges also comprise the adhesive strips to bond each shell together following a collection operation.

Notwithstanding the forgoing, a need exists for improved pooper scooper devices that are easy to operate, highly effective at collecting faeces from a wide variety of ground surfaces, can be easily and cost effectively manufactured, and which address the aforementioned drawbacks associated with prior art devices.

### SUMMARY

In one aspect, the present invention provides a pooper scooper device according to claim 1.

The pooper scooper device is used for picking up faeces from a surface, typically a ground surface or floor, and bagging said faeces in a collection bag. In use, the device is placed inside a collection bag, and the bag is interposed between the two opposing leaves. The device is held in an operator's hand inside the bag. The bag protects the pooper scooper device and the operator's hand from direct contact with the faeces. A faecal deposit may be collected by gripping the deposit in the bag between the two opposing leaves of the pooper scooper device. The opposing leaves can grip the deposit by biasing the opposing leaves towards each other to a closed position. At least part of the terminal region of the first opposing leaf comprises a slot or channel, preferably a channel, for receiving at least part of the terminal region of the second opposing leaf, and at least part of the terminal regions of the first and second opposing leaves overlap when biased to a closed position. Thus, when the opposing leaves are biased towards each other to a closed position, at least part of the terminal region of the second opposing leaf is received in the slot or channel, preferably a channel, of the first opposing leaf, and at least part of the terminal region of the first leaf and at least part of the terminal regions of the second leaf overlap. Advantageously, this tightly closes the bag, with the gripped faecal deposit therein, thereby facilitating easy removal of the bag with the faecal deposit safely held therein from the surface.

At least part of the terminal region of the second opposing leaf is receivable in the slot or channel of the first opposing leaf. For example, at least part of the terminal region of the second opposing leaf may be received in the slot or channel of the first opposing leaf when said opposing leaves are biased towards each other to a closed position. Advantageously, the device is particularly effective for bagging faeces from a wide variety of surfaces, including grass, which is often challenging for state-of-the-art pooper scooper devices. Furthermore, the device is particularly effective for bagging faeces of a soft or runny consistency.

Suitably, at least a part of the terminal region of the second opposing leaf forms a clearance fit or transition fit with the slot or channel of the first opposing leaf. Advantageously, a clearance or transition fit, facilitates secure closing of a bag with a faecal deposit gripped therein, by overlapping at least part of the surface of the bag, in a U-shape, about the at least part of the terminal region of the second opposing leaf in the slot or channel of the first opposing leaf. The secure closing of the bag in this manner, is particularly advantageous for collecting a deposit from challenging surfaces such as on grass.

In accordance with the invention, the slot or channel on the first opposing leaf may be defined by two opposing walls, wherein the two opposing walls are connected by end walls. For example, at least a part of the terminal region of the first opposing leaf forms one of the two opposing walls. Advantageously, when the two opposing walls which define the slot or channel are connected, the collection bag will be closed more securely, as the bag will be overlapped between, and/or abut against the connected walls.

Suitably, the slot or channel has a slot/channel height of 1 mm to 10 mm, such as from 1 mm to 8 mm, preferably from 1.01 mm to 4.5 mm.

The slot or channel has a three-dimensional character. The slot or channel on the first opposing leaf may be defined by two opposing walls and a base. Suitably, this configuration provides a closed or partially closed slot or channel in which the at least part of the terminal region of the second opposing leaf is received. A closed or partially closed slot or channel may advantageously control the size of an enclosed volume when the opposing leaves are biased to a closed position.

Suitably, each of the first and second opposing leaves have inner surfaces and outer surfaces. The bag is interposed between the opposing leaves against the inner surfaces of the leaves. Preferably, the slot or channel on the first opposing leaf may be on an inner surface of the first opposing leaf. Advantageously, when the slot or channel on the first opposing leaf is on an inner surface of the first opposing leaf, a faecal deposit may be more easily gripped, and a cleaner collection effected than if the slot or channel is on an outer surface of the first opposing leaf. Furthermore, the likelihood of breakage or damage to the slot or channel on the first opposing leaf is reduced when the slot or channel is provided on an inner surface of the first opposing leaf. Preferably, the slot or channel on the first opposing leaf is elongate. Suitably, the slot or channel on the first opposing leaf is elongate and extends on an inner surface of the first opposing leaf. Suitably, the slot or channel on the first opposing leaf is elongate and extends along a longitudinal axis of the device. Suitably, the slot or channel extends along a longitudinal axis on an inner surface of the first opposing leaf. The slot or channel is substantially three-dimensional in character. The slot or channel cannot be considered substantially two-dimensional, for example, the slot or channel cannot be considered a two-dimensional notch.

Advantageously, the pooper scooper device may comprise a pair of actuating members coupled to said opposing leaves for reversibly displacing the opposing leaves from a first position to a second position. The actuating members may comprise digit receptacles defined in each of the opposing leaves. Each of the actuating members may comprise a gripping channel comprising a base and sidewalls, said gripping channel being defined by an opposing leaf and a baffle, and wherein said gripping channel is configured to receive an operator's digit, optionally, the gripping channel is a substantially U-shaped channel or substantially C-shaped channel in cross-section.

The pooper scooper device may comprise one or more stops to limit the size of an enclosed volume when the opposing leaves are biased to a closed position. For example, one or both of the first and second opposing leaves may comprise one or more stops to limit the size of an enclosed volume when the opposing leaves are biased to a closed position.

Advantageously, the pooper scooper device may comprise a housing for storing a plurality of disposable bags. The two opposing leaves may extend from said housing.

Suitably, the pooper scooper device comprises a single intermediate leaf, which extends from the housing, thereby defining channels between the opposing leaves.

Suitably, the opposing leaves extend from the housing. Suitably, the opposing leaves are hinged on the housing. For example, the opposing leaves may be circumferentially disposed about the housing. The opposing leaves may extend from the housing from a single connection point, or from connection points in close proximity to each other, e.g. within 10 mm for example within 45 degrees of each other, when measured from a centre point of the housing. Advantageously, when the opposing leaves extend from the housing from connected hinges (i.e. hinges connected to the housing at a single connection point, or within 10 mm of each other), optimal alignment of the channel on the first opposing leaf, and the terminal region of the second opposing leaf is achieved.

The pooper scooper device may further comprise at least one deflector, such as a deflector plate, or deflector baffle, projecting from an inner surface of at least one of the two opposing leaves. For example, at least one deflector may project from an inner surface of each of the two opposing leaves. Suitably, at least one deflector projecting from the inner surface of the first opposing leaf is vertically offset from at least one deflector projecting from the inner surface of the second opposing leaf. Suitably, at least one deflector projecting from the inner surface of the first opposing leaf is offset from at least one deflector projecting from the inner surface of the second opposing leaf along the longitudinal axis of the device. The at least one deflector projecting from the inner surface of one opposing leaf may be laterally spaced with respect to at least one deflector projecting from the inner surface of the other opposing leaf.

Suitably, two deflectors project from the inner surface of the first opposing leaf, and said two deflectors are vertically offset with respect to each other. Suitably, two deflectors project from the inner surface of the second opposing leaf, and said two deflectors are vertically offset with respect to each other.

The pooper scooper device may further comprise a groove defined in the second opposing leaf and a corresponding dividing wall defined in the channel of the first opposing leaf, wherein said dividing wall extends between the two opposing walls of said channel, and said dividing wall is receivable in said groove when the opposing leaves are biased towards each other to a closed position.

Suitably, two grooves are defined in the second opposing leaf, and two corresponding dividing walls are defined in the channel of the first opposing leaf, said dividing walls extending between the two opposing walls of said channel, wherein each of said dividing walls is receivable in its corresponding groove when the opposing leaves are biased towards each other to a closed position. Advantageously, the grooves and corresponding dividing walls co-operate in a male-female relationship, and in use, when the device is placed in a bag to collect a faecal deposit, the bag is compressed about the dividing walls in the groove, and the minimum volume between the opposing leaves is controlled. This reduces the likelihood of a faecal deposit being overly compressed, and expelled from the sides of the bag, at the open ends of the pooper scooper device.

The housing may be substantially cylindrical in cross-section and the leaves may be circumferentially displaced about the housing. The housing may be substantially cylindrical in cross-section and the leaves may extend from the housing from connected hinges e.g. hinges connected at a single point (in cross-section) of the housing. At least a portion of the opposing leaves may be arcuately shaped. The housing may comprise one or more stops to limit the volume of an enclosed space formed when the opposing leaves are biased to a closed position.

The housing may further comprise a dispensing aid for dispensing or receiving bags from said housing. The dispensing aid may comprise a rotatable dispenser for dispensing bags from a roll.

The housing may further comprise one or more stops to limit the size of an enclosed volume formed when the opposing leaves are biased towards a closed position.

Suitably, one or more or all/each of the leaves may comprise a terminal region having a rounded edge, such as an enlarged rounded edge. For example, the cross-section of said edge may be substantially mushroom shaped or tear drop shaped. Advantageously, this reduces the likelihood of a collection bag being perforated during a collection.

In another aspect, not claimed, the present invention provides a method for bagging faeces comprising the steps of: (i) providing a pooper scooper device as described herein; (ii) placing said pooper scooper device in a collection bag, such as a plastic bag; (iii) interposing the bag between the opposing leaves; and (iv) collecting the faeces in the bag by actuating the opposing leaves of the pooper scooper device to bag the faeces. Advantageously, standard collection bags may be used, and the method does not involve manufacture of a collection bag.

In another aspect, the present invention provides a dog leash assembly comprising a dog leash housing said dog leash housing having a dog leash secured thereto, and a pooper scooper device as described herein. Suitably, the dog leash assembly comprises a retractable dog leash.

The dog leash housing may comprise a body, a handle and engaging means for securing a dog leash to said housing, said body comprising a holder for the pooper scooper device as described herein.

Suitably, the holder comprises a chamber and retaining means for retaining the pooper scooper device at least partially within the chamber such that faeces engaging elements of the pooper scooper device are housed within the chamber, and a handle of the pooper scooper device remains at least partially outside the chamber.

### Brief Description of the Drawings

**Figure 1a** shows a cross-section of a pooper scooper disclosed in UK Design No. 6161551. **Figure 1b** shows a cross-section of a pooper scooper of the type disclosed in UK Design No. 6161551, with a bag interposed between the leaves, when the opposing leaves are biased to a closed position, and an enlarged image of the intermediate leaf and opposing leaves when the opposing leaves are biased to a closed position (without the bag shown).
**Figure 2a** shows a cross-section of a pooper scooper according to the present invention. **Figure 2b** shows a cross-section of the pooper scooper device of **Figure 2a** where the opposing leaves are biased to a closed position.
**Figure 3a** shows a cross-section of a pooper scooper device according to another aspect of the present invention. **Figure 3b** shows the pooper scooper device of **Figure 3a** with the opposing leaves biased to a closed position. **Figure 3c** shows a cross-section of a pooper scooper device according to another aspect of the invention.
**Figure 4** shows an underside isometric view of the pooper scooper device (1001) of **Figure 3a & 3b****.**
**Figure 5a** shows a cross-section view of a pooper scooper device according to a further aspect of the present invention. **Figure 5b** shows the pooper scooper device of **Figure 5a** with the opposing leaves biased to a closed position. **Figure 5c** shows a pooper scooper device according to a still further aspect of the present invention.
**Figure 6** is an underside isometric view of a further pooper scooper device of the present invention.
**Figure 7a** is an exploded perspective view of a pooper scooper device according to the present invention. Figure 7b is an underside isometric view of a further pooper scooper device of the present invention. Figure 7c is an underside isometric view of a pooper scooper device of the present invention.
**Figure 8a****-f** show a collection operation using a pooper scooper device as shown in **Figure 3a****.** **Figure 8g****-j** show a collection operation using a pooper scooper device as shown in **Figure 7b****.** **Figure 8k** shows a pooper scooper device and bag in a collection operation, with the device in the closed position. **Figure 8i** shows the bagged faeces after a successful collection operation.
**Figure 9a-9f** show various views of a pooper scooper device of the present invention. **Figures 9g** **and** **9h** show views of a further pooper scooper device according to the present invention.
**Figure 10** shows a dog leash assembly comprising a pooper scooper device as described herein.
**Figure 11** shows another dog leash assembly for a pooper scooper device according to the present invention (pooper scooper device not shown)
**Figure 12** shows the underside of the dog leash assembly of **Figure 11****.**
**Figure 13** shows an exploded view of the dog leash assembly of **Figures 11** **and** **12****.**

### DETAILED DESCRIPTION

Definitions: The terms "approximately" and "about" as used herein refers to ranges up to ±10%, such as ±5%, ±2.5%, ±2% or ±1% of the measurement in question.

The invention will be more readily appreciated by a review of the examples which follow.

As outlined in the background information section, numerous pooper scooper devices are known, however, the device described in US patent no. 10,738,428**,** represented a significant advancement on prior art pooper scoopers, due to its size, shape, user-friendliness and its functionality as a component part of a dog leash assembly, which is also described in US patent no. 10,738,428. In addition, UK design no. 6161551**,** which describes a pooper scooper device having two opposing leaves and a single intermediate leaf defining channels between said opposing leaves, represented a further advancement.

Throughout the figures, the same reference numerals and characters, unless otherwise stated, are used to denote like features, elements, components or portions of the illustrated embodiments.

**Figure 1a** shows a cross-section of a pooper scooper device disclosed in UK Design No. 6161551. The pooper scooper device (111) comprises a housing (22), two opposing leaves (33a, 33b) extending from the housing (22), and a single intermediate leaf (44), which extends from the housing between the opposing leaves (33a, 33b). The intermediate leaf (44) is laterally spaced between the opposing leaves (33a, 33b). The intermediate leaf (44) defines channels (55) between opposing leaves (33a, 33b).

**Figure 1b** shows a cross-section of the pooper scooper device of **Figure 1a** with the outer leaves biased together by an operator. The single intermediate leaf (44) substantially bisects a cavity defined by the opposing leaves. When the opposing leaves are squeezed together, the opposing leaves (33a, 33b) abut with the bag therebetween. The vertical distance (Vd1) between the edge of the intermediate leaf (44) and the opposing leaves (33a, 33b) when said opposing leaves are biased to the closed position is less approximately 0.5 mm.

When faeces are deposited on a ground surface such as deep grass, stones or gravel, collection of faeces therefrom can be challenging, as for example, the ground surface structure, such as grass can become tangled with, and/or adhere to the faeces. In addition, the terrain surrounding the faecal deposit, such as grass about the perimeter of the deposit may obstruct or impede effective collection. Pressing down onto the faeces may compound these issues on some surfaces. Removal from deep grass in particular can be challenging, because numerous blades of grass form a large surface area for the faeces to adhere to, so when faeces in a collection bag is lifted from a grass surface, the grass which is rooted to the ground anchors the adhered faeces to the ground to a degree. This can lead to partial opening of a bag in which the faeces have been gripped, and an imperfect collection.

Through extensive research the present inventor has identified that the above problems are solved, and a clean and effective collection can be achieved using the pooper scooper of the present invention.

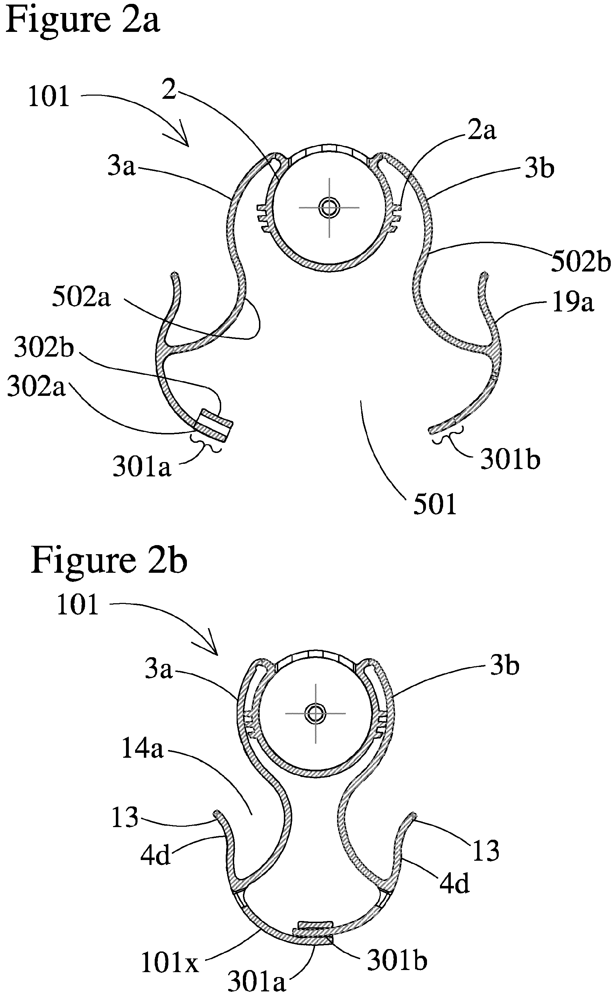

A cross-section of a pooper scooper device (101) of one embodiment of the present invention is shown in **Figure 2a****.** The pooper scooper device (101) comprises two opposing (outer) leaves (3a, 3b), comprising a first opposing leaf (3a) and a second opposing leaf (3b) each of said opposing leaves having a terminal region, wherein at least part of the terminal region of the first opposing leaf comprises a slot or channel (301a) for receiving at least part of the terminal region of the second opposing leaf (301b), said opposing leaves (3a, 3b) being moveable relative to each other to move apart in an opening direction and to move towards each other in a closing direction, and wherein at least part of the terminal region of the first opposing leaf overlaps with at least part of the terminal region of the second opposing leaf (301b), when said opposing leaves are biased towards each other to a closed position (101x) as shown in **Figure 2b****.** Suitably, the channel 301a is elongate and extends along a longitudinal axis of the device. Suitably, the channel extends along a longitudinal axis on an inner surface of the first opposing leaf. The channel is three-dimensional in character. The channel 301a cannot be considered a 2 dimensional notch. The opposing leaves are in a resting position (19a) in **Figure 2a****.**

At least part of the terminal region of the second opposing leaf (301b) is a male member received in the slot or channel (301a) (i.e. female member) of the first opposing leaf (3a) when said opposing leaves (3a, 3b) are biased towards each other to a closed position (101x).

The opposing leaves (3a, 3b) extend from a housing (2). The opposing leaves extend along a longitudinal axis of the device. The housing (2) may be used to store one or more disposable bags. The housing (2) may for example be cylindrical, or elliptical cylindrical in shape, but the person skilled in the art will appreciate that other shapes would be equally suitable. The housing (2) may be provided with one or more stops (2a), suitably, at least two stops (2a). The stops (2a) may be useful to an operator for maintaining a minimum volume in the enclosure formed when the leaves overlap, by providing tactile feedback to the operator, when the opposing leaves (3a, 3b) abut the stops (2a). The stops (2a) could similarly be provided on the opposing leaves (3a, 3b), or on one or more of the opposing leaves (3a, 3b) and the housing (2). Each of the first and second opposing leaves (3a, 3b) have inner surfaces (502a) and outer surfaces (502b). A cavity (501) is defined by the opposing leaves (3a, 3b). In use, a collection bag is interposed between the opposing leaves (3a, 3b) in the cavity (501). The collection bag protects the pooper scooper device from directly contacting the faeces during a collection.

As shown in **Figure 2b****,** the pooper scooper device (101) may comprise a pair of actuating members (13) each member comprising a gripping channel comprising a substantially U-shaped channel (14a) for receiving an operator's digits. Each substantially U-shaped channel comprises a base and sidewalls and said substantially U-shaped channel is defined by an opposing leaf (3a, 3b) and a baffle (4d). This enables an operator holding the device to actuate the opposing leaves (3a, 3b) from a resting position to an open position by employing their digits which are received in each of the substantially U-shaped channels (14a) to impose a biasing force against each baffle (4d) causing the opposing leaves (3a, 3b) of the device to diverge and thereby to increase the volume of the cavity (501) defined by the opposing leaves (3a, 3b). Similarly, an operator can actuate the opposing leaves (3) from a resting position to a closed position (101x) by employing their digits which are received in each of the U-shaped channels (14a) to impose a biasing force against the opposing leaves (3a, 3b) causing said leaves to converge and thereby to decrease the volume of the cavity (501) defined by the opposing leaves (3a, 3b). (This actuation is discussed in more detail below). The skilled person will appreciate that alternative configurations of actuating members would be equally suitable, for example, the actuating members (13) may comprise digit receptacles defined in the leaves (3a, 3b). In such an embodiment, the operator's digits are received in the digit receptacles, and the operator may employ their digits which are received in said digit receptacles to similarly actuate the opposing leaves (3a, 3b) from a resting position to an open position or from a resting position to a closed position. The skilled person will understand that other actuating mechanisms would be also be suitable, for example, a substantially C-shaped channel or substantially V-shaped channel would also be suitable.

The first opposing leaf (3a) comprises a terminal region, and at least part of the terminal region of the first opposing leaf (3a) comprises a slot or channel (301a). The slot or channel (301a) on the first opposing leaf (3a) is defined by two opposing walls (302a, 302b). The opposing walls may be connected, for example by end walls (not shown).

**Figure 2b** shows a cross-section view of the pooper scooper device (101) of **Figure 2a** where the opposing leaves (3a, 3b) are biased to a closed position (101x). At least part of the terminal region of the second opposing leaf (301b) is received in the slot or channel (301a) when the opposing leaves are biased to a closed position (101x). For example, at least part of the terminal region of the second opposing leaf (301b) may form a clearance fit or transition fit with the slot or channel of the first opposing leaf. The at least part of the terminal regions of the first and second opposing leaves co-operate, such that when a bag is interposed between said first and second opposing leaves, and the opposing leaves are biased to a closed position (101x), the bag is folded and optionally gripped by the male-female mating of the first and second opposing leaves. This co-operation between the opposing leaves (3a, 3b) reversibly closes the bag, by folding the bag in the slot (301a) about the at least part of the terminal region of the second opposing leaf (3b) thereby enabling a deposit to be effectively removed from a ground surface.

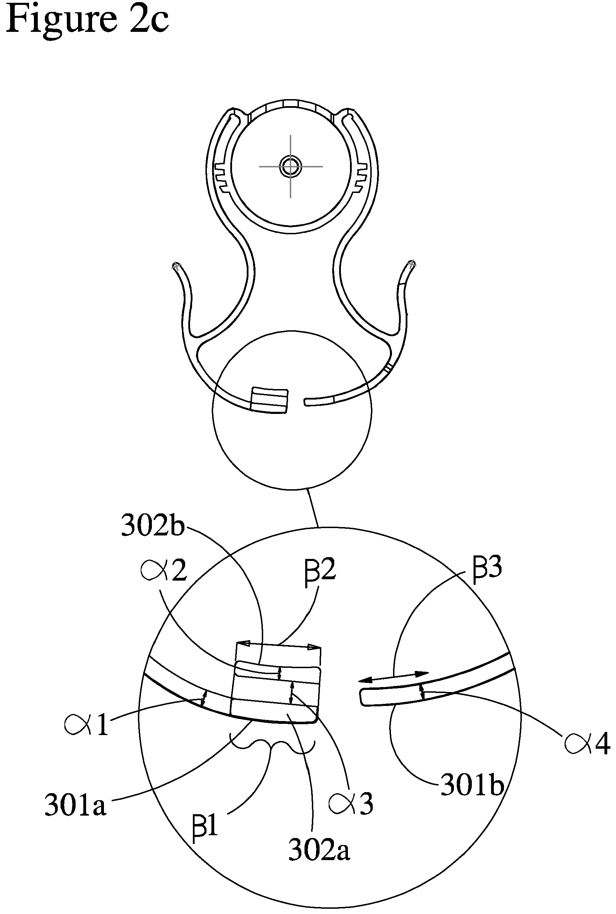

**Figure 2c** shows an enlarged section of the slot or channel on the first opposing leaf and the at least a part of the terminal region of the second opposing leaf. The opposing wall (302a) has a width β1 of at least 3 mm, such as from 3 mm to 30 mm, preferably from about 3 mm to about 15 mm. The opposing wall (302b) has a width β2 of at least 3 mm, such as from 3 mm to 30 mm, preferably from about 3 mm to about 15 mm. The widths β1 and β2 may be the same or different. The at least part of the terminal region of the second opposing leaf (301b), has a width β3 of at least 3 mm, such as from 3 mm to 30 mm, for example from about 3 mm to about 15 mm.

Each of the first and second opposing leaves (3a, 3b) has a wall thickness (α1, α4) in the range of from about 1 mm to about 4 mm, preferably, in the range of from about 1.5 mm to about 2.5mm, such as about 2mm. The opposing wall (302b) suitably has a wall thickness α2 in the range of from about 1 mm to about 4 mm, such as from 1.5 mm to 2.5 mm, for example of about 2 mm. The opposing walls (302a, 302b) suitably define a gap therebetween having a height α3 in the range of from 1 mm to 10 mm, such as from 1 mm to 8mm, preferably from 1.01 mm to 4.5 mm. The gap is suitably greater in height α3 than the wall thickness α4 of the second opposing leaf, for example by a distance of from about 0.01 mm to about 5 mm, such as from about 0.01 mm to about 2 mm. For example, each of the opposing leaves may have a terminal region having a wall thickness of about 2 mm, and the gap defined by the opposing walls of the slot or channel may be about 2.1 to about 3.0 mm in height α3.

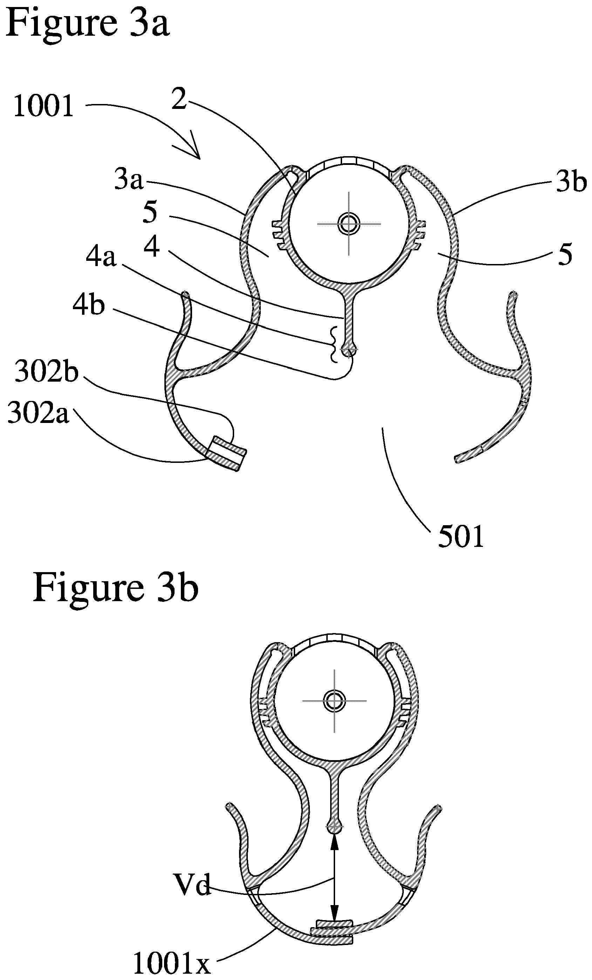

**Figure 3a** shows another embodiment of the pooper scooper device (1001) of the present invention. The opposing leaves (3a, 3b) extend from a housing (2). The housing (2) may be used to store one or more disposable bags. An intermediate leaf (4) extends from the housing (2) between the opposing leaves (3a, 3b). The intermediate leaf (4) projects from the housing into the cavity (501) defined by the opposing leaves (3a, 3b). The intermediate leaf (4) is laterally spaced between the opposing leaves (3). The intermediate leaf (4) defines channels (5) between opposing leaves (3a, 3b). The channels (5) are elongate and three-dimensional in character. The channels cannot be considered as substantially two-dimensional notches. Optionally, the intermediate leaf has a terminal region (4a) comprising an edge (4b), said edge being rounded and preferably bulbous, for example the edge may have a tear drop or mushroom cross-section. One or more or each of the leaves (3a, 3b, 4) may have smoothened or rounded edges to reduce the likelihood of bag perforation during a collection. The slot or channel (301a) on the first opposing leaf (3a) is defined by two opposing walls (302a, 302b) and may be considered the first slot or channel (301a). The channels (5) defined by the intermediate leaf between the opposing leaves (3a, 3b) may be considered the second and third channels (5).

**Figure 3b****,** shows the pooper scooper device of **Figure 3a** in the closed position (1001x). Suitably, the vertical distance (Vd) between the edge (4b) of the intermediate leaf (4) and the overlapped end regions of the first and second opposing leaves (3a, 3b) is in the range of from 10 mm to 70 mm, preferably from 15 mm to 45 mm, such as from about 20 mm to about 30 mm. This proves particularly advantageous, when collecting faecal deposits from challenging ground surfaces, such as deep grass. Preferably, the vertical distance (Vd) between the edge (4b) and the overlapped end regions is greater than about 10 mm, preferably greater than about 15 mm, more preferably, greater than about 20 mm; this reduces the intermediate leaf pushing a faecal deposit deeper into a grassy surface, before the deposit can be gripped between the opposing leaves (3a, 3b). When the vertical distance (Vd) between the edge (4b) and the overlapped end regions is greater than about 70 mm, a bagged faecal deposit gripped by the opposing leaves is less likely to be pressed/shaped/formed about the housing (2) in the channels (5). For pooper scooper devices where the vertical distance between the edge (4b) and the overlapped regions is in the range of about 15 mm to about 45 mm, preferably, about 20 mm to 30 mm collection of faecal deposits from challenging ground surfaces is optimised, and multiple collections are particularly facilitated due to the presence of said intermediate leaf (4).

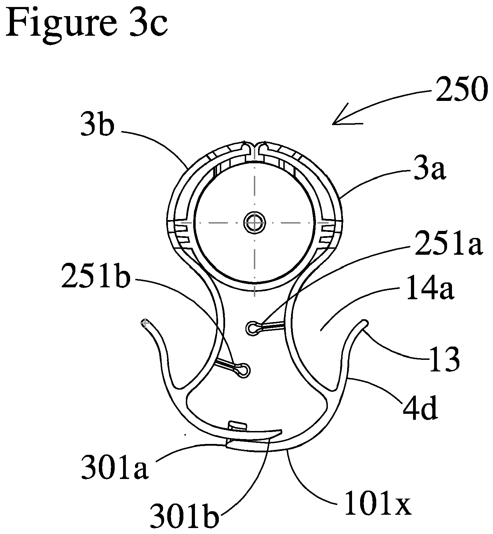

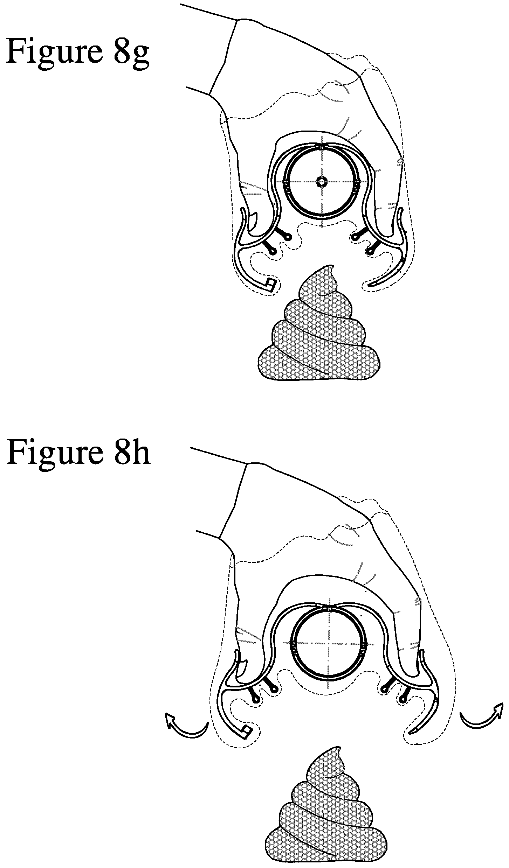

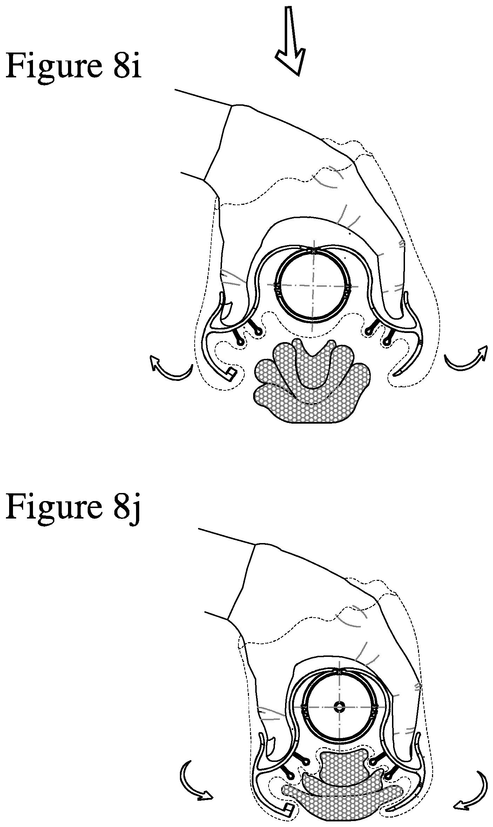

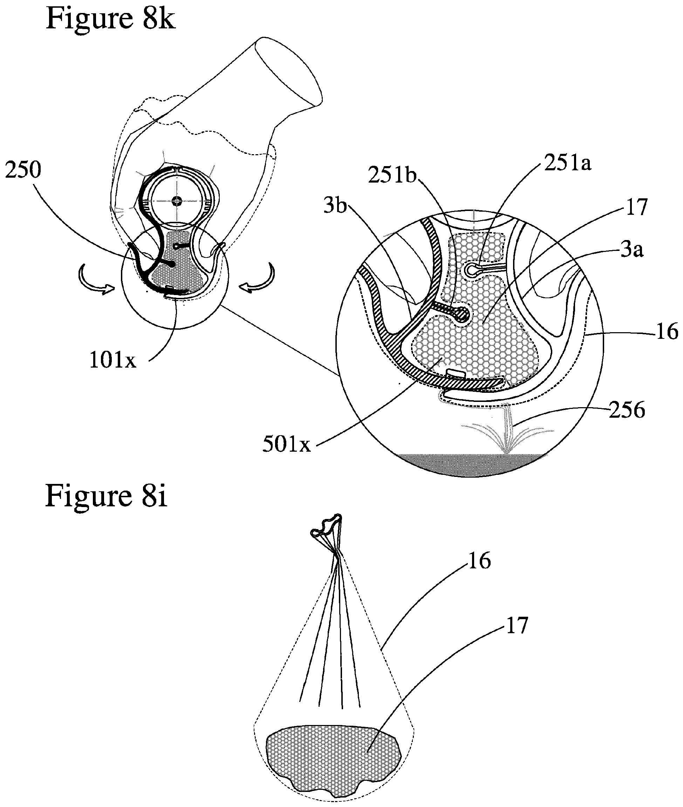

**Figure 3c** shows a further pooper scooper device (250) according to a further aspect of the invention, where the opposing leaves (3a, 3b) are biased to a closed position (101x). At least part of the terminal region of the second opposing leaf (301b) is received in the slot or channel (301a) when the opposing leaves are biased to a closed position (101x). For example, at least part of the terminal region of the second opposing leaf (301b) may form a clearance fit or transition fit with the slot or channel of the first opposing leaf. The at least part of the terminal regions of the first and second opposing leaves co-operate, such that when a bag is interposed between said first and second opposing leaves, and the opposing leaves are biased to a closed position (101x), the bag is folded and optionally gripped by the male-female mating of the first and second opposing leaves. This co-operation between the opposing leaves (3a, 3b) reversibly closes the bag, by folding the bag in the slot (301a) about the at least part of the terminal region of the second opposing leaf (3b) thereby enabling a deposit to be effectively removed from a ground surface. This is also shown in Figure 8k. The embodiment shown in Figure 3c is similar to that shown in Figure 2b, however, the embodiment in Figure 3c further comprises deflectors (251a, 251b) which project from inner surfaces of the opposing leaves. Deflector (251a) projects from the inner surface of the first opposing leaf (3a), and deflector (251b) projects from the inner surface of the second opposing leaf (3b). Each of the deflectors are vertically offset from one another. Furthermore, though not visible in the cross-sectional view of Figure 3c, the deflectors, which in the embodiment shown extend longitudinally along an inner surface of the opposing leaves are shorter in length than a longitudinal length of the opposing leaves. The deflectors constitute projecting members or baffles which project into the enclosure defined by the opposing leaves when biased to a closed position. The deflectors may be deflector plates or deflector baffles for example. The deflectors preferably extend along a longitudinal axis of the device. The deflectors, such as deflector plates or deflector baffles, may have rounded edges to reduce the likelihood of perforation of a collection bag during a collection operation. The deflectors function to increase the surface area of the collection bag in contact with a faecal deposit, and thereby harness the natural adhesive properties of the faeces during a collection operation. By vertically off-setting the deflectors (251a, 251b), faeces collected in a bag during a collection operation is compressed into multiple regions within the bag inside the enclosure defined by the opposing leaves (3a, 3b) when biased to the closed position. Furthermore, if collection of multiple faecal deposits is required, the deflectors function as shelves and reduce the likelihood of a collected deposit falling from the bag when the leaves of the device and a collection bag interposed between the leaves of said device are reopened. The deflectors effectively form shelves or wedges which serve to compartmentalise and/or compress a collected faecal deposit in a collection bag when the opposing leaves are closed. This reduces the likelihood of the faecal deposit falling from the bag when the opposing leaves are reopened.

The term "corresponding" is used to indicate that a given dividing wall is dimensioned and positioned to be received in a suitably sized and positioned groove, similarly the term "corresponding" is used to indicate that a given groove is dimensioned and positioned to receive a suitably sized and positioned groove.

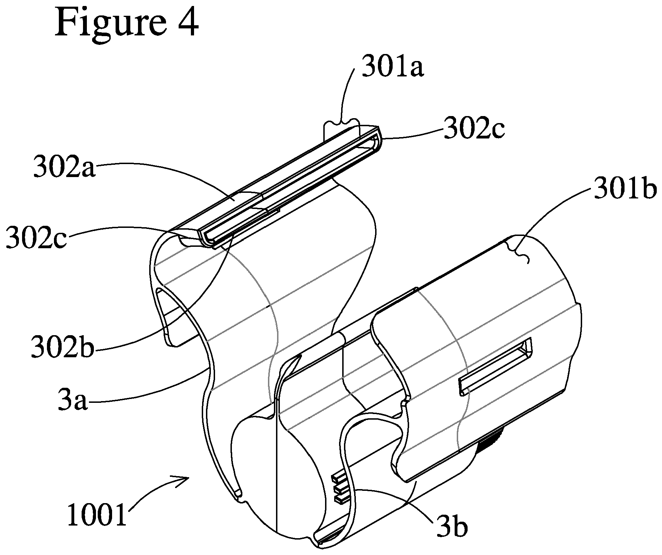

**Figure 4** shows an underside isometric view of the pooper scooper device (1001) of **Figure 3a & 3b****.** The opposing (outer) leaves (3a, 3b), comprise a first opposing leaf (3a) and a second opposing leaf (3b) each of said leaves having a terminal region, wherein at least part of the terminal region of the first opposing leaf comprises a slot or channel (301a) for receiving at least part of the terminal region of the second opposing leaf (301b). The slot or channel (301a) is defined by two opposing walls (302a, 302b). The opposing walls (302a, 302b) are connected by end walls (302c). Advantageously, such end walls ensure a more secure closing of a collection bag, when the opposing leaves (3a, 3b) are biased to the closed position during a collection operation. The person skilled in the art will appreciate that the slot or channel could have alternative configurations.

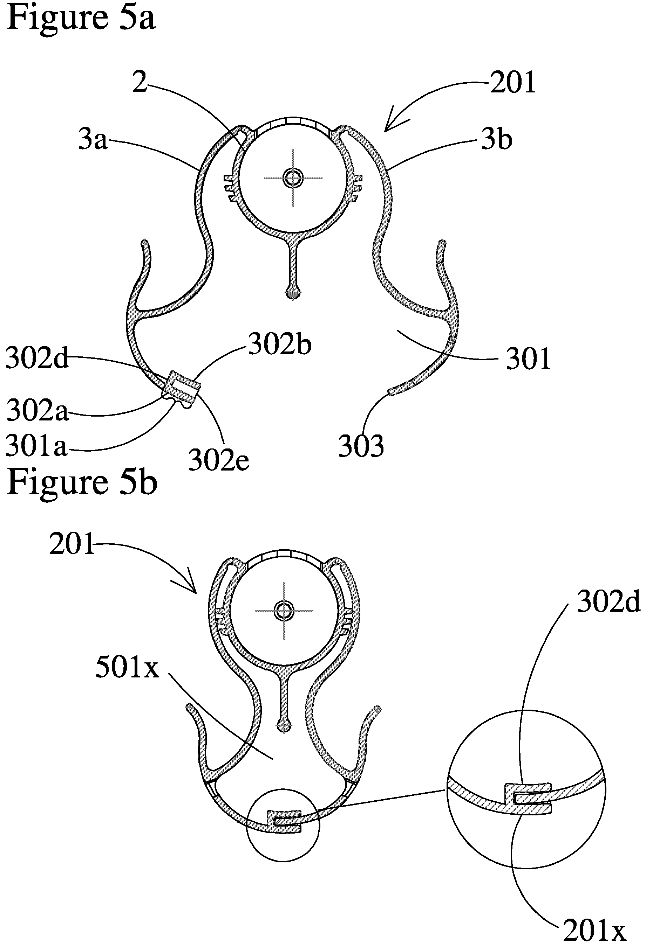

For example, the pooper scooper device (201) shown in **Figure 5a****,** comprises a slot or channel (301a) of the first opposing leaf (3a) that is formed by two opposing walls (302a, 302b) that are connected by end walls (not shown) and a base wall (302d). Together the opposing walls (302a, 302b) form a channel (302e) having a substantially U-shaped cross-section. The person skilled in the art will appreciate that end walls are optional.

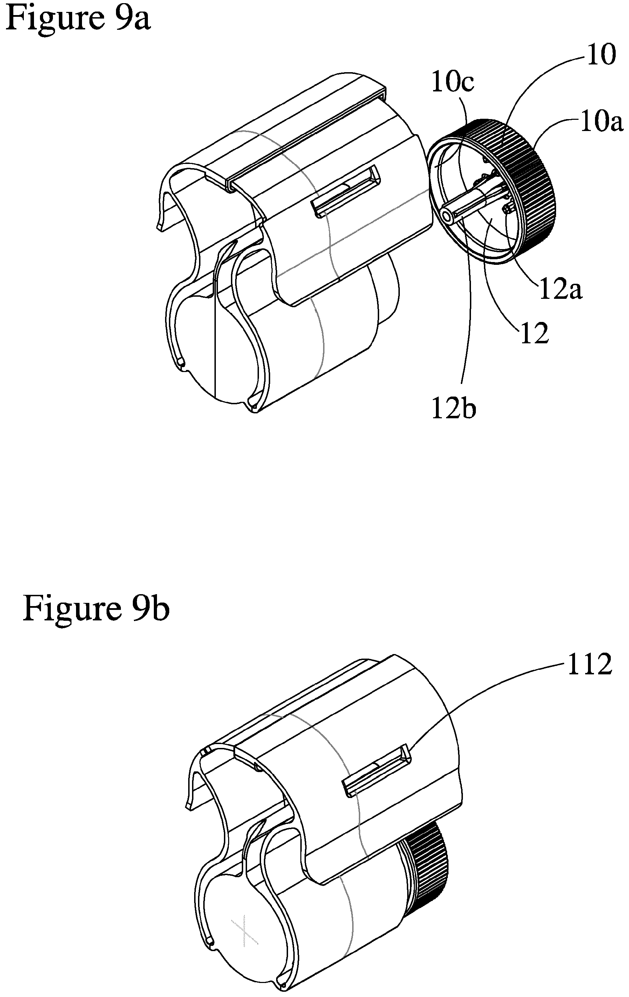

A cross-section view of the pooper scooper device (201) where the opposing leaves (3a, 3b) are biased to a closed position (201x) is also magnified in **Figure 5b****.** The presence of the base wall (302d) in the slot or channel (301a) limits the minimum volume of the enclosure (501x) formed by the two opposing leaves (3a, 3b) when biased to the closed position (201x). This is particularly advantageous when collecting larger faecal deposits. An edge (303) of the at least part of the terminal region of the second opposing leaf (301b) abuts the base wall (302d), precluding any further volume reduction of the enclosure (501x) defined by the two opposing leaves (3a, 3b). The space defined between the two opposing leaves in a non-closed state is referred to as a cavity (501), and the space defined between the two opposing leaves when biased to a closed position is referred to as an enclosure (501x). The person skilled in the art will appreciate that the enclosure (501x) has open ends (see **Figure 9a**).

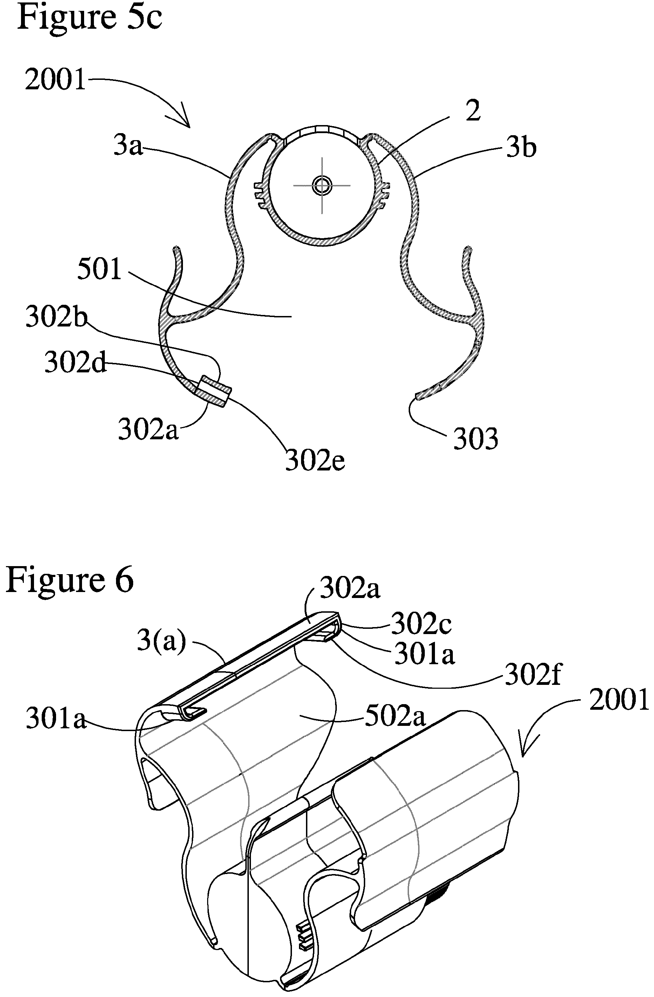

**Figure 5c** shows a still further embodiment of the pooper scooper device of the present invention. The device shown in **Figure 5c** is similar to the device in **Figures 5a and 5b****,** albeit the device of **Figure 5c** does not include an intermediate leaf.

**Figure 6** is an underside isometric view of a further pooper scooper device (3001) of the present invention. The device (3001) has an alternative arrangement for the slot or channel (301a) on the first opposing leaf (3a). In the embodiment of **Figure 6****,** each slot or channel (301a) is defined by a terminal region of the first opposing leaf (3a), a projection or baffle (302f), and an end wall (302c). The person skilled in the art would appreciate that the projection or baffle (302f) could equally project from the inner surface of the first opposing leaf (3a), without the end wall (302c) being present.

Though shown on the inner surface (502a) of each of the embodiments depicted in the figures, the slot or channel (301a) could alternatively be provided on an outer surface (502b) of the first opposing leaf (502b). The slot or channel (301a) is preferably located on the inner surface (502a) of the first opposing leaf (3a), as this reduces the likelihood of damage to the slot as it is protected by the end region (301a) of the first opposing leaf (3a) from contact with the ground surface.

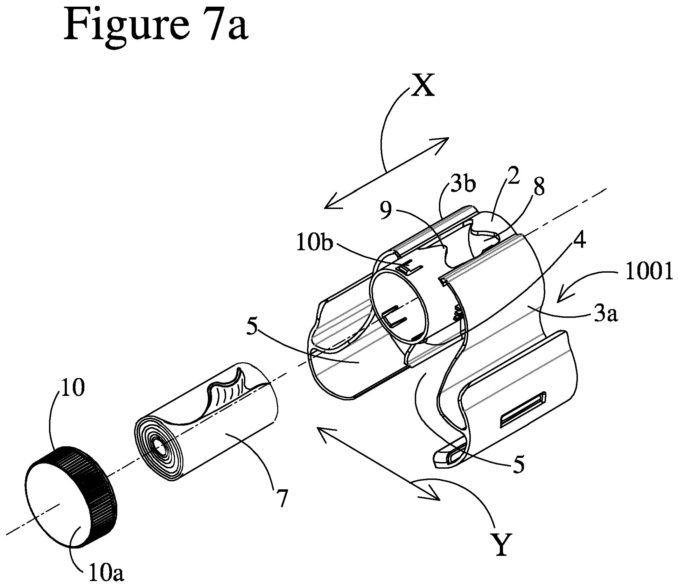

**Figure 7a** is an exploded perspective view of a pooper scooper device (1001). The device has a longitudinal axis depicted as X, and a transverse axis Y. The leaves (3a, 3b, 4) run parallel to the longitudinal axis X and are laterally spaced across transverse axis Y. The channel (301a) is defined by a two opposing walls (302a and 302b), wherein one of said opposing walls (302a) is a terminal region of the first opposing leaf (3a), and said channel 301a is disposed on an inner surface of said first opposing leaf, and extends along the longitudinal axis of the device. The elongate three-dimensional character of the channels (5) defined by the intermediate leaf (4) between opposing leaves (3a, 3b) is clearly depicted. The housing (2) and the intermediate leaf (4) are integrally formed. This reduces the complexity of the device, thereby reducing manufacturing costs and simplifying the manufacturing process. The opposing leaves (3a, 3b) and housing (2) may form a flexure bearing. The housing (2) is substantially cylindrical and the leaves (3a, 3b, 4) are circumferentially displaced about the housing (2). The opposing leaves (3a, 3b) are at least partially arcuately shaped. The housing (2) may be used to store one or more disposable bags, such as a plurality of disposable bags, or a roll of disposable collection bags (7). The housing (2) comprises an opening (8) defined therein, wherefrom an operator can remove a bag, when required. The opening (8) comprises protruding flanges (9), against which a single bag can be separated from a roll of bags, by snagging a tear line in a roll of bags against one of said flanges (9).

The device comprises a dispensing aid (10) for dispensing and receiving bags from the housing (2). In the embodiment shown in **Figure 7a****,** the dispensing aid comprises an annular snap fit connection formed by an annular groove on the cap (10a), and deflection tabs (10b) on the housing. The embodiment in **Figure 7a** comprises three deflection tabs (10b), however, embodiments may comprise one or a plurality of deflection tabs. The cap is rotatable when the snap fit connection is assembled, which permits winding/re-winding of a roll of bags (7) in the housing (2).

The skilled person will appreciate that other configurations of dispensing aid are equally suitable.

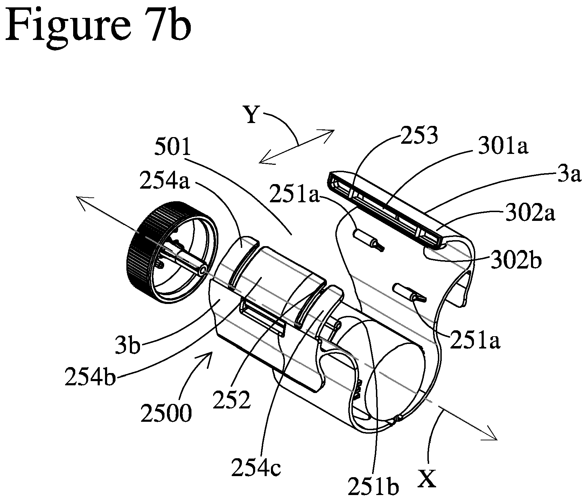

**Figure 7b** is an exploded underside isometric view of a further pooper scooper device (2500) similar to the device shown in Figure 3c. The device has a longitudinal axis depicted as X, and a transverse axis Y. The first and second opposing leaves (3a, 3b) run parallel to the longitudinal axis X and are laterally spaced across transverse axis Y. The first opposing leaf comprises two deflectors (251a). The deflectors project from the inner surface of the first opposing leaf into a cavity (501) defined by the opposing leaves (3a, 3b). The deflectors (251a) are vertically offset with respect to each other on the inner surface of the first opposing leaf (3a). The second opposing leaf also comprises two deflectors (251b) projecting from the inner surface of the second opposing leaf into the cavity defined by the opposing leaves. It will be appreciated that only one of said deflectors (251b) is visible in the view shown in Figure 7b. The deflectors (251b) are vertically offset with respect to each other on the inner surface of the second opposing leaf (3b). The deflectors (251a, 251b) may be deflector plates or deflector baffles. The deflector plates preferably extend along a longitudinal axis X of the device. The deflectors, such as deflector plates, may have rounded edges to reduce the likelihood of perforation of a collection bag during a collection operation. The deflectors function to increase the surface area of the collection bag in contact with a faecal deposit, and thereby harness the natural adhesive properties of the faeces during a collection operation. By vertically off-setting the deflectors (251a, 251b), faeces collected in a bag during a collection operation is compressed into multiple regions within the bag inside the cavity defined by the opposing leaves (3a, 3b). Furthermore, if collection of multiple faecal deposits is required, the deflectors function as shelves and reduce the likelihood of a collected deposit falling from the bag when the leaves of the device and a collection bag interposed between the leaves of said device are opened. The deflectors may be curved, for example curved towards the housing of the device.

Suitably, the deflectors may have a width of 8 to 20 mm, for example, the deflectors may be 10 to 18 mm in width, such as from 10 to 16 mm in width.

In some embodiments, such as that shown in **Figure 7b****,** the channel (301a) on the inner surface of the first opposing leaf is defined by a two opposing walls (302a and 302b), wherein one of said opposing walls (302a) is a terminal region of the first opposing leaf (3a), and said channel (301a) is disposed on an inner surface (502a) of said first opposing leaf, and extends along the longitudinal axis of the device. The second opposing leaf (3b) comprises two grooves (252) defined therein. The grooves (252) are elongate, and extend from edge (303) of the second opposing leaf (3b). The channel (301a) on the first opposing leaf (3a) comprises corresponding dividing walls (253) which are receivable in the grooves (252) of the second opposing leaf (3b), when the opposing leaves (3a, 3b) are biased to a closed position. The dividing walls (253) extend between the two opposing walls (302a, 302b) of the channel (301a). The co-operation between the grooves (252) and the dividing walls (253) has several advantages. For example, the device may be stored in a more compact manner, making storage and transport of the device easier. In particular, the opposing leaves may be biased to a closed position having a smaller enclosure volume (defined between the opposing leaves in the closed position). The enclosure volume for the device of **Figure 7b** when the opposing leaves are biased to a closed position, may be smaller than for example the same sized device having a base wall present in the channel, for example, as shown in **Figure 5b****.**

Furthermore, during a collection operation, a collection bag interposed between the opposing leaves (3a, 3b) is forced into the channel (301a) by the edge (303) of the second opposing leaf (3b) about the dividing walls (253), and into the grooves (252). This co-operation between the dividing walls, the grooves and the bag limits the minimum volume of the enclosure formed by the two opposing leaves (3a, 3b) when biased to the closed position. In the embodiment shown in Figure 7b, two grooves (252) are shown, with two corresponding dividing walls (253). The person skilled in the art will appreciate that a single groove defined in the second opposing leaf with a corresponding dividing wall defined in the channel on the inner surface of the first opposing leaf is also envisaged, as would three grooves defined in the second opposing leaf with three corresponding dividing walls defined in the channel on the inner surface of the first opposing leaf.

The grooves may have a width (that extends along the elongate axis of the pooper scooper device in the range of from about 2.0 mm to about 8.0 mm, suitably the grooves may have a width of about 2.5 mm to 5.0 mm, more preferably from about 2.5 mm to about 4.0 mm. Suitably, the width of a groove is about 3 mm.

The grooves may be considered to divide the second opposing leaf into teeth (254a, 254b, 254c) as shown in Figure 7b. There may be up to four teeth, however, it is preferable to have two or three teeth. Suitably, each tooth has a minimum width of 8.0 mm. The person skilled in the art will appreciate that teeth do not have to have the same widths. A tooth width of less than about 8.0 mm may be more likely to break, through rough contact with a ground surface, and or through shear strain over time from compression of bags against in grooves against the dividing walls.

The corresponding dividing walls will be marginally smaller in width than the width of the grooves. For example, the dividing walls may have a width in the range of from 1.0 to 4.0 mm, suitably from about 1.5 to about 2.5 mm in width.

Preferably the device comprises one or two grooves defined in the second opposing leaf, and the same number of corresponding dividing walls defined in the channel of the first opposing leaf. If more than three dividing walls are present in the channel (with a corresponding number of grooves on the second opposing leaf), the ability of at least part of the terminal region of the second opposing leaf to be received in the channel of the first opposing leaf will be significantly reduced when said opposing leaves are biased towards each other to a closed position, when a bag is interposed between said opposing leaves. The greater the number of grooves and corresponding dividing walls, the greater the restriction on the collection bag collection bag being folded and cleaned within the channel about the terminal region of the second opposing leaf, when the opposing leaves are biased to the closed position.

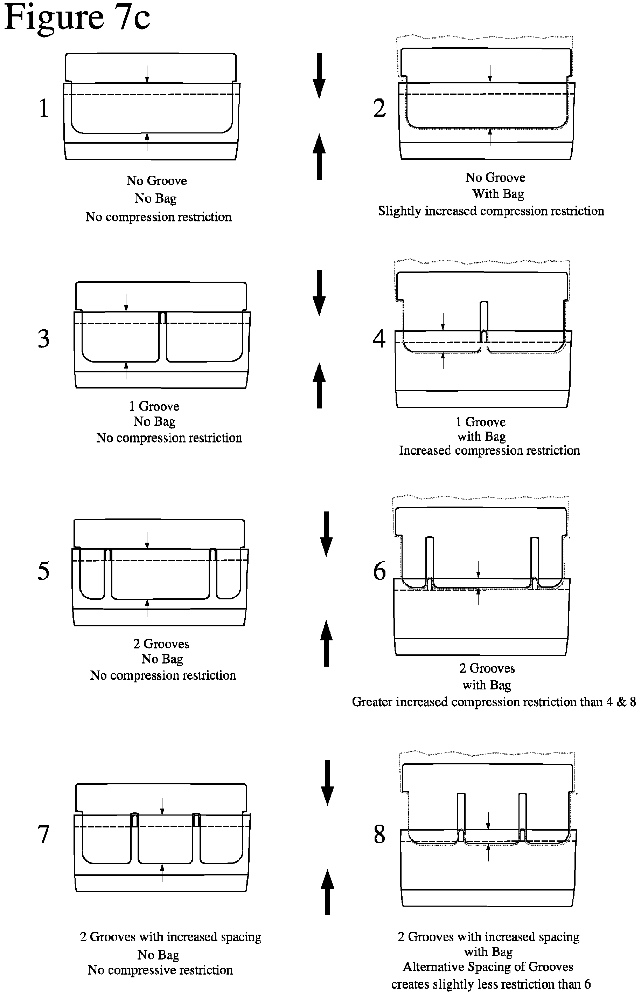

**Figure 7c** is a partial underside view of pooper scooper devices with grooves and corresponding dividing walls in the closed position, and also a comparative view of a pooper scooper device having no grooves or dividing walls also in the closed position. **Figure 7c** illustrates the restrictions on compression - quantifiable by the degree (or length) of overlap of the terminal regions of the first and second opposing leaves when biased to a closed position.

**Figures 7(c1) and 7(c2)** show that without any grooves or walls the degree of overlap between the terminal regions of the first and second opposing leaves is unrestricted in the absence of a bag, and in use, when a bag is interposed between the leaves, a slight increase in compression strength is required, and the degree of overlap is slightly reduced. **Figure7(c3) and 7(c4)** show the degree of overlap of the terminal regions of the first and second opposing leaves with and without a bag for a pooper scooper device comprising a single groove defined in the second opposing leaf, and a corresponding single dividing wall defined in the channel of the first opposing leaf. The presence of the dividing wall, and groove lead to compression of a bag in the groove against the dividing wall, resulting in a reduction in overlap of the terminal regions of the first and second opposing leaves. **Figure 7(c5) to 7(c8)** show the degree of overlap of the terminal regions of the first and second opposing leaves with and without a bag for pooper scooper devices comprising a two grooves defined in the second opposing leaf, and a two corresponding dividing walls defined in the channel of the first opposing leaf. Advantageously, the presence of a groove defined in the second opposing leaf, and the corresponding dividing wall defined in the channel of the first opposing leaf reduce the likelihood of a faecal deposit that is collected from a ground surface in a collection bag using the device, from being squeezed out of the open ends of the device, when the opposing leaves are biased towards a closed position. This co-operation between the groove, the dividing walls and the collection bag advantageously enables a cleaner, more effective collection.

A still further advantage of the device of the present invention, is its ability to effectively collect faeces that is runny in nature. Such faeces can be very challenging to collect using a traditional hand-in-bag collection method, or indeed using prior art scoopers. The presence of the channel on the inner surface of the first opposing leaf and the male-female cooperation of the channel on terminal region of the first opposing leaf and the on the second opposing whereby at least part of the terminal region of the first opposing leaf overlaps with at least part of the terminal region of the second opposing leaf, when said opposing leaves are biased towards each other to a closed position, enables a bag to be effectively scraped along a ground surface, and such runny faeces to be directed into the bag. The configuration of the opposing leaves i.e. the ground engaging elements facilitates folding and reversible closing of the bag with the faecal deposit held therein, and facilitates an effective collection of a faecal deposit from a ground surface, such as from long grass, asphalt, concrete, or tiled surface in a collection bag. Hence, the device of the present invention not only facilitates more effective collection of faecal deposits from challenging ground surfaces, it also facilitates collection of challenging faecal deposits, such as those with a soft or runny consistency from ground surfaces. This functionality is particularly advantageous for dogs having a delicate constitution, or suffering from scour for example.

The opposing leaves (3a, 3b) of the pooper scooper device described herein are suitably resiliently deformable, once a biasing force applied by the user is removed, the opposing leaves will revert to the resting position. The pooper scooper device is suitably formed of plastic material, for example of polycarbonate. The pooper scooper device may be formed by moulding, for example by injection moulding.

As shown the embodiment of **Figure 3a****,** the intermediate leaf has a terminal region (4a) comprising an edge (4b), said edge being rounded and preferably bulbous. Advantageously, by rounding the edge (4b) to a tear drop or mushroom cross-sectional shape, the likelihood of perforation of a bag is significantly reduced. Furthermore, when the terminal region of the intermediate leaf is bulbous (or an enlarged rounded edge, for example being mushroom or tear drop shaped in cross-section), during a collection operation, a bag containing faeces gripped between the opposing leaves (3a, 3b) will be shaped about the intermediate leaf (4) when the opposing leaves (3a, 3b) are biased to a closed position (1001x) as shown in **Figure 3b****.** The rounded edge (4b) reduces the likelihood of the bag, or the faeces contained within the bag, or the bag containing faeces, dropping out of the cavity (501) defined by the two opposing leaves (3a, 3b), when the opposing leaves (3a, 3b) are diverged.

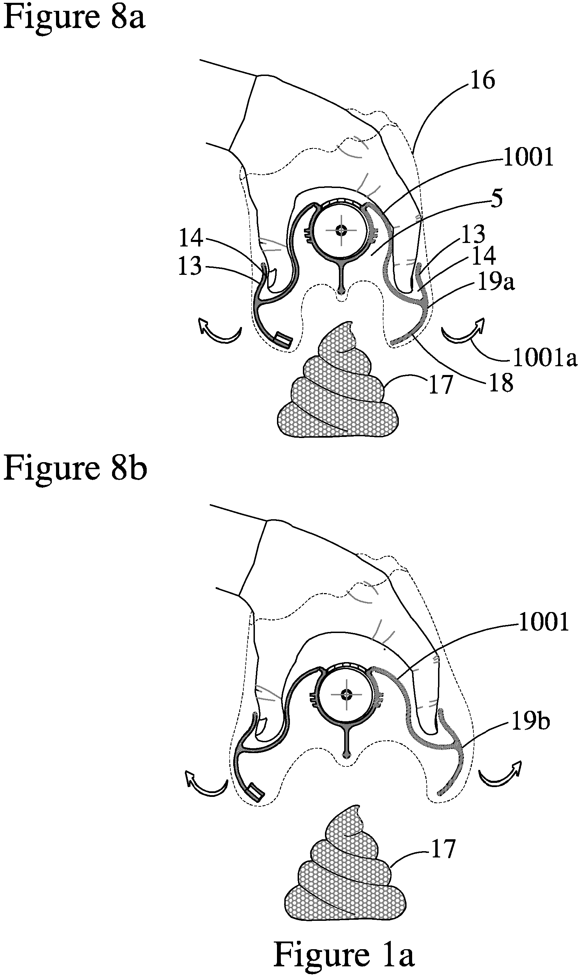

**Figures 8a-8f** show a collection operation using a pooper scooper device (1001) as shown in **Figures 3a and 3b****.**

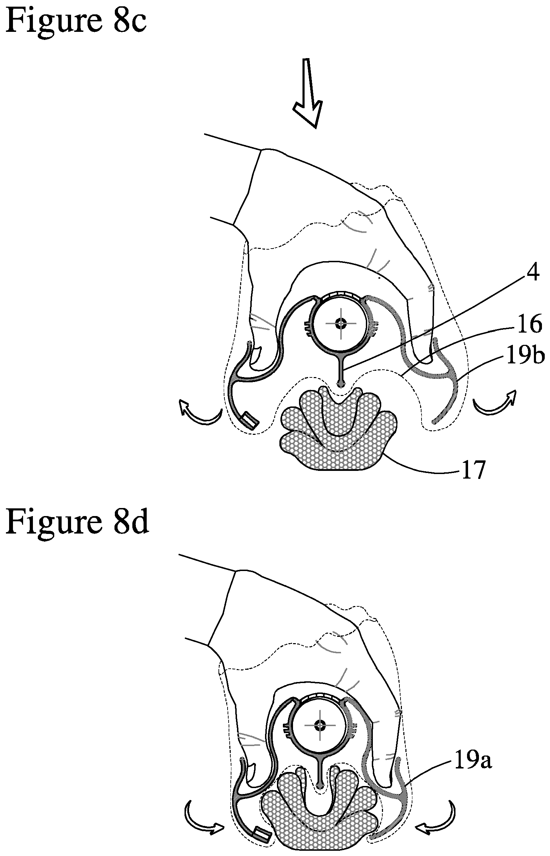

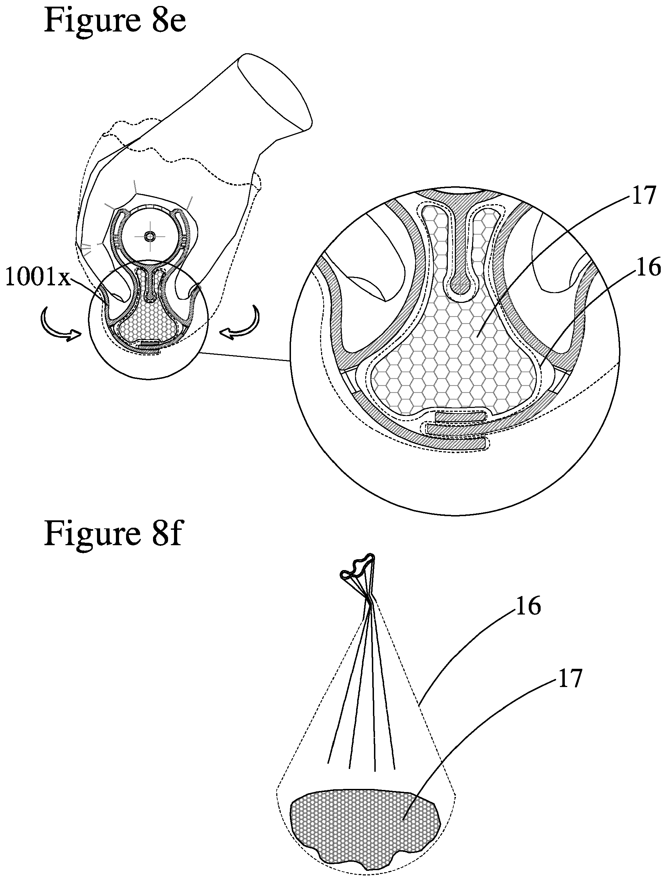

**Figure 8a** shows the pooper scooper device (1001), held in an operator's hand. The device (1) is shown inside a bag (16). The operator's thumb and fingers (i.e. the operator's digits) are shown in the substantially U-shaped channel digit receptacles (14) defined in the actuating members (13). The faeces (17) to be collected is shown below the device (1001) being held by the operator. Arrows (1001a) show the direction in which the opposing leaves (3a, 3b) may be moved apart in an opening direction. The operator may actuate the device (1001) in an opening direction, from a resting first position (19a) to an open second position (19b) as shown in **Figure 8b****.** The device is constructed from a material of suitable flexural strength to facilitate such actuation. This is accomplished by the operator forcing the opposing leaves (3a, 3b) apart. The pooper scooper device shown is integrally formed, and may for example be constructed by 3-dimensional printing of the device from a suitable substrate, such as from a plastic material. Suitably, the device is moulded, and may for example be formed from a thermoplastic or thermoset material. Suitably, the device may be manufactured by plastic injection moulding. Actuation of the opposing leaves (3a, 3b) apart, increases the volume of the channels (5), by increasing the distance between the leaves (3a, 3b & 4), thereby enabling the collection of a comparatively larger faecal deposit. **Figures 8a and Figure 8b** show the device (1001) inside bag (16), with the bag (16) interposed between the leaves (3a, 3b & 4) in the channels (5). **Figure 8c** shows the operator with the opposing leaves (3a, 3b) in an open position about to grip faeces (17) with the bag (16). **Figure 8d** shows the operator gripping the faeces (17) between the opposing leaves (3a, 3b) which are protected from directly contacting the faeces by the bag (16). For larger faecal deposits, the intermediate leaf (4) may press the bag (16) into the faeces (17), and the faeces will be forced into channels (5). When gripping the faeces (17) with the device (1001), the opposing leaves (3a, 3b) are moved from the open position (19) as shown in **Figures** 8b and 8c to a closed position (1001x) as shown in **Figure 8e****.** The at least part of the terminal region (301b) of the second opposing leaf (3b) is received in the slot or channel (301a) of the first opposing leaf (3a) in the closed position (1001x). **Figure 8d** shows the device gripping faeces

**Figure 8e** is a magnified view of the closed position (1001x) during a collection operation. When the leaves are biased to the closed position (1001x) with the bag interposed between the leaves (3a, 3b), the bag is folded closed by the at least part of the terminal region (301b) of the second opposing leaf (3b) being received in the slot or channel (301a) of the first opposing leaf (3a). This folding reversibly closes the bag, and prevents any collected faeces from falling out of the cavity defined by the two opposing leaves (3a, 3b). Thus, this cooperation between the terminal regions of the opposing leaves, advantageously, facilitates folding and reversible closing of the bag with the faecal deposit held therein, but may also reversibly clamp the bag closed, depending on how tight the fit between the at least part of the terminal region of the second opposing leaf (3b) is in the slot or channel (301a) of the first opposing leaf (3a). The male-female cooperation between the terminal regions of the opposing leaves is particularly advantages for collections of faecal deposits from challenging ground surfaces. For example, if a faecal deposit has grass entrained therein, the large surface area of the grass provides a large adherence surface for faeces to be anchored to the ground via the grass. The pooper scooper device of the present invention, is particularly suitable for effecting clean collection of such faecal deposits, as when the faeces is gripped in the bag between the opposing leaves (3a, 3b), and the opposing leaves are biased to the closed position (1001x), grass entrained in the faeces will be folded with the bag through the male-female cooperation between the at least part of the terminal region (301b) of the second opposing leaf (3b) and the slot or channel of the first opposing leaf (3a). When the operator lifts the device from the ground surface with the faeces collected in the bag, any grass that is so folded will either be wiped (clean) on the folded bag surface, or if the grass is tightly gripped, it will be pulled from the ground. In both scenarios, a clean collection is achieved. This is a significant advantage over prior art pooper scoopers, where grass entrained in a faecal deposit could cling onto faeces held between opposing leaves.

The slot or channel of the first opposing leaf, does not constitute a groove defined in the terminus wall of said opposing leaf. Thus, the overlap of the opposing leaves when biased to a closed position does not lead to the termini (or edges) of the opposing leaves abutting or interfitting. For example, the opposing leaves are not configured to align, in the same manner alignment interlocks of parts of a moulding would align said parts for interfitment, rather the terminal regions of the opposing leaves overlap when said leaves are biased to a closed position.

A further advantage of the device of the present invention is that when removing collected faeces from a ground surface, the male-female cooperation between the overlapping end regions i.e. the terminal region of the second opposing leaf received in the slot or channel of the first opposing leaf, provides additional rigidity and strength to each of the opposing leaves, such that when the device is lifted from a surface e.g. a ground surface, the overlapping section of the leaves cannot vertically separate. This is in contrast to, and a significant advantage over, a device having partially overlapping jaws without a male-female cooperation between overlapping end regions. Advantageously, the male-female cooperation enables the size of an enclosed volume when the opposing leaves are biased to a closed position to be controlled.

Suitably, the bag is folded along a length of about 3 mm to about 80 mm, when the opposing leaves (3a, 3b) are biased to the closed position. For example, the bag may be folded along a length of about 3 mm to about 50 mm, when the opposing leaves (3a, 3b) are biased to the closed position. Preferably, the bag is folded along a length of about 5 mm to about 40 mm, such as from about 5 mm to about 30 mm, when the opposing leaves (3a, 3b) are biased to the closed position.

Suitably, the at least part of the terminal region of the first opposing leaf overlaps with at least part of the terminal region of the second opposing leaf by at least 3 mm, such as by at least 5 mm, when the opposing leaves are biased to a closed position.

Once the faeces have been gripped in the bag (16) between the opposing leaves (3a, 3b), the bag (16) may be slipped from the operator's hand and tied off tied off as shown in **Figure 8f****.** The operator may then dispose of the collected faeces appropriately.

**Figures 8g to 8i** are similar to **Figures 8a to 8f** albeit the pooper scooper device in **Figures 8g to 8j****,** is a pooper scooper device as shown in **Figure 7b****,** and **Figure 8k** shows a pooper scooper device as shown in **Figure 3c** and a bag comprising faeces. **Figure 8k** shows the pooper scooper device with the opposing leaves in the closed position.

A cross-section view of the pooper scooper device (250) where the opposing leaves (3a, 3b) are biased to a closed position (101x) is also magnified in **Figure 8k****.** In embodiments comprising a groove defined in the terminal region of the second opposing leaf and comprising a corresponding dividing walls defined in the channel of the first opposing leaf, when the device is placed in the bag and the bag is interposed between the opposing leaves for a collection operation, the bag is compressed by the dividing wall in the groove, which limits the minimum volume of the enclosure (501x) defined between the opposing leaves when biased to the closed position (101x). This is particularly advantageous when collecting larger faecal deposits. The compression of the bag against the dividing wall in the groove limits further volume reduction of the enclosure (501x) defined by the two opposing leaves (3a, 3b). The space defined between the two opposing leaves in a non-closed state is referred to as a cavity (501), and the space defined between the two opposing leaves when biased to a closed position is referred to as an enclosure (501x). **Figure 8k** also shows how the deflectors (251a, 251b) compress the faeces in the collection bag into distinct regions within the enclosure (501x). This leads to an increase in the surface area of the collection bag in contact with the faeces, and enhanced adherence of the faeces to the inner walls of the collection bag. Furthermore, the deflectors may function as shelves and support the bag comprising the faeces when the opposing leaves are reopened, thereby reducing the likelihood of faeces falling from the collection bag, and increasing the likelihood of a successful collection being effected. The enlarged image in **Figure 8k** also shows how long grass (256) will be cleaned during a collection operation through the folding of the collection bag about the terminal region of the second opposing leaf when received in the channel of the first opposing leaf.

Embodiments which include the intermediate leaf, are particularly effective when a number of faecal deposits need to be collected. Suitably, the device includes a single intermediate leaf (4). Advantageously, the presence of the intermediate leaf (4), increase the contact surface area of the bag with the faeces. This increase in bag surface area, harnesses the natural adhesive properties of the faeces, thereby enabling the operator to successfully collect and bag the faeces. While the device shown in **Figure 1a** also included an intermediate leaf (44) between opposing leaves (33a, 33b), the intermediate leaf (44) in the commercial embodiments of said design had a vertical distance (V1d) between the intermediate leaf (44) and the (abutting) opposing leaves (33a, 33b) of less than 1 mm (approx. 0.5 mm), when said opposing leaves (33a, 33b) are biased to the closed position (111x). A lengthy intermediate leaf is undesirable for collecting faecal deposits from challenging ground surfaces, such as from deep grass. Furthermore, a pinch point is formed between the opposing leaves (3a, 3b) of the device on the bag at the point of abutment of the opposing leaves (33a, 33b) when squeezed together. The pinch point is a significantly less effective closure of the bag, in contrast to the male-female fit between the at least part of the terminal regions of the opposing leaves of the pooper scooper device of the present invention. Furthermore, the male-female fit when the opposing leaves are biased to the closed position, whereby the at least part of the terminal region of the second opposing leaf (301b) is received in the slot or channel (301a) of the at least part of the terminal region of the first opposing leaf (3a), provides enhanced stability to the pooper scooper device, and a bag with collected faeces therein, which is enclosed in the enclosure defined by the opposing leaves in the closed position. In particular, the opposing leaves may be clamped together, so that a vertical gap is less likely to form between the end regions of the opposing leaves, when the device is lifted from the ground in a collection operation.

Advantageously, the pooper scooper device can be used to effectively pick up faeces from a variety of surfaces such as from pavements, gravelled surface or grassy areas, such as in public parks, or sandy areas, such as on beaches. Suitably, the leaves may be provided with gripping means, to increase the grip between the leaves and the bag interposed between the leaves.

**Figure 9a** is an underside isometric rear view of a pooper scooper device according to the invention with the opposing leaves (3a, 3b) in a closed position, and with the cap (10a) (i.e. a rotatable removable) of the dispensing aid (10) removed. The cap comprises an annular groove (10c), which forms a snap fit connection with deflection tabs on the housing (not shown). The cap further comprises a gripper (12), said gripper comprising gripping edges such as detents (12a) and a mandrel or stem (12b).

**Figure 9b** shows the pooper scooper device of **Figure 9a** with the cap fitted, and the opposing leaves (3a, 3b) biased to a closed position. The opposing leaves are provided with engagement means, for engaging a holder for the pooper scooper device. The engagement means may for example be one or more windows (112) defined in one or both of the opposing leaves.

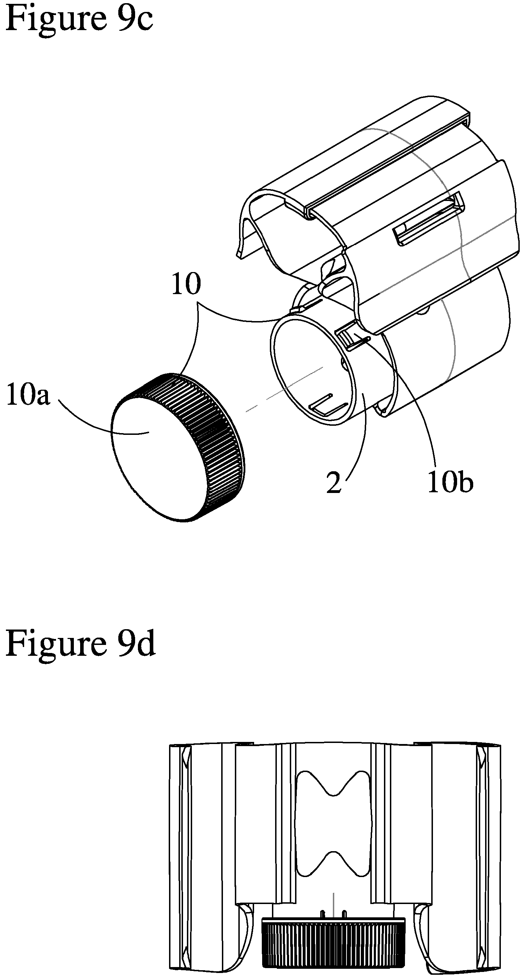

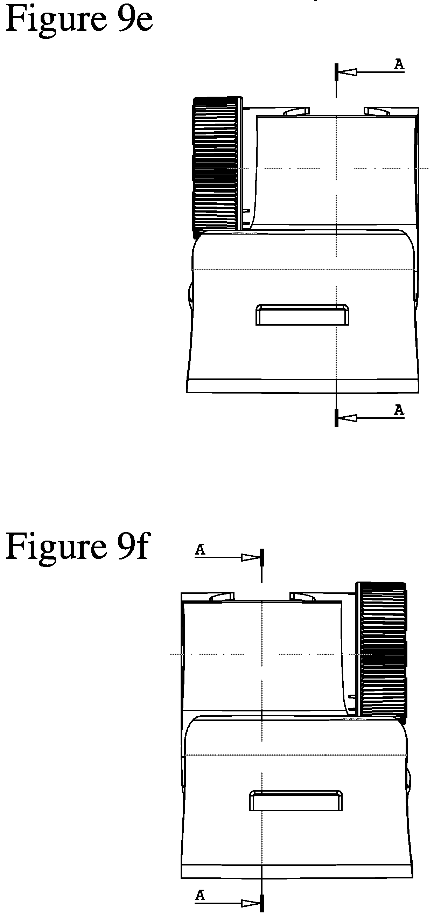

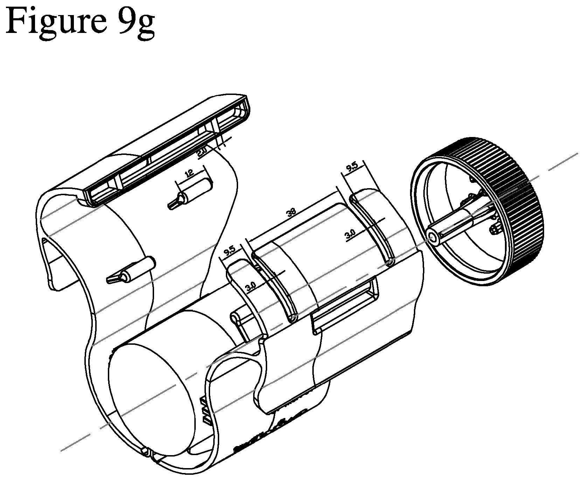

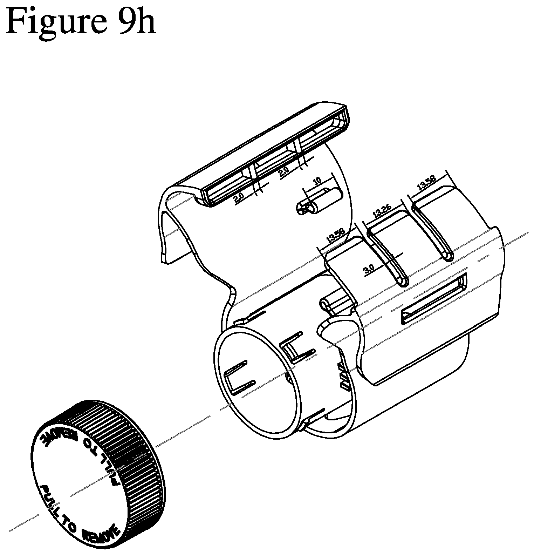

**Figure 9c** shows the underside isometric front view of the pooper scooper device of **Figure 9a****.** The deflection tabs (10b) of the dispensing aid (10) may be seen on the housing (2). **Figure 9d** is a plan view of the pooper scooper device of **Figure 9b****.** **Figure 9e** is a side view of the pooper scooper device of **Figure 9a****.** **Figure 9f** is a side view of the pooper scooper device of **Figure 9a****.** The cap (10a) of the dispensing aid (10) is fitted in each of **Figures 9b****,** **9d****,** **9e** and **9f****.** The cap (10a) of the dispensing aid (10) is removed in **Figures 9a** **and** **9c****.** **Figure 9g** shows an underside isometric view of a pooper scooper device according to another aspect of the invention, with representative dimensions for the deflectors, dividing walls, and grooves, as well as their relative positioning on the opposing leaves. **Figure 9h** shows an underside isometric view of a further pooper scooper device of the invention with representative dimensions for the deflectors, dividing walls, and grooves, as well as their relative positioning on the opposing leaves.

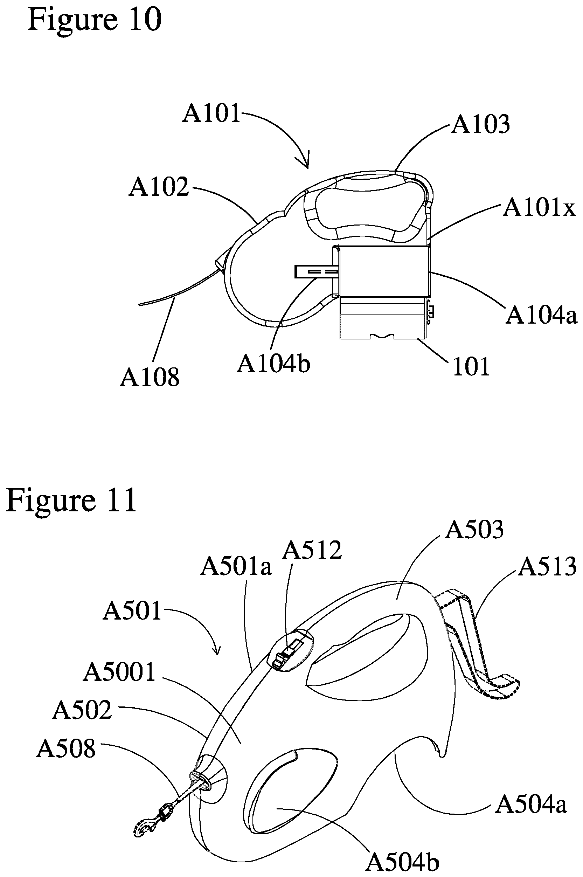

**Figure 10** is a side view of a dog leash assembly (A101) comprising a pooper scooper device (101, 1001) according to the invention. The dog leash assembly comprises a dog leash housing (A101x) with a dog leash (A108) secured thereto. The dog leash assembly may comprise a retractable dog leash (A102). The dog leash housing (A101x) comprises a body (A101y), a handle (A103) and a holder (A104a) for the pooper scooper device according to the invention. The dog leash housing (A101x) further comprises a bag holder (A104b) for holding used bags comprising faeces, thereby enabling the operator to transport the used bag without holding same directly in their hand.

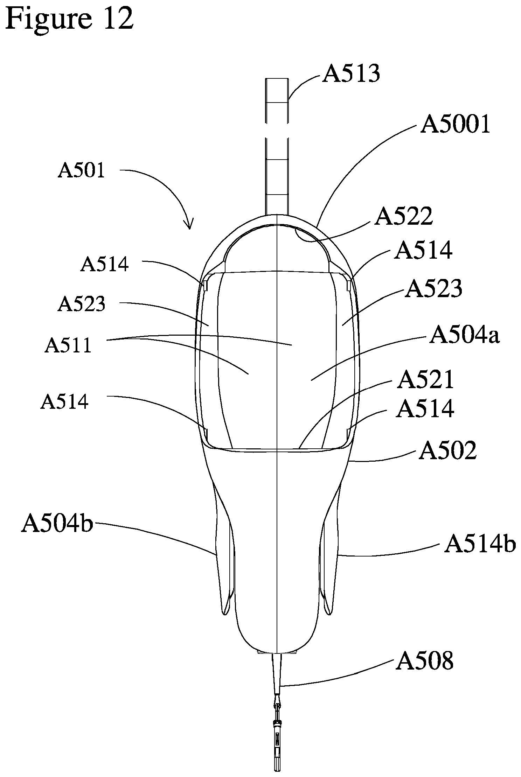

**Figure 11** shows another embodiment of a dog leash assembly (A501) according to the invention (pooper scooper not shown). The dog leash assembly (A501) comprises a dog leash housing (A5001) comprising a body (A501a), having a handle (A503), and engaging means (not shown) for securing a dog leash (A508) to said housing. The dog leash assembly comprises a retractable dog leash (A502). The engaging means comprises a spool rotatably mounted within the body (not shown), said spool being connected to one end of said leash (A508). The body (A501a) further comprises a holder (A504a) for holding a pooper scooper device. The dog leash assembly (A501) also may optionally comprise a strap (A513) through which the operator may insert their hand, and which can also be used to hang the dog leash housing (A5001), for example from a hook, when storing the dog leash assembly. **Figure 12** shows a bottom view of the dog leash assembly of **Figure 11****.** The holder (A504a) comprises a chamber (A511) within the body of the dog leash housing (A5001). The chamber comprises a first end (A), a second end (A522) and sidewalls (A523) joining said first and second ends. The holder (A504a) further comprises retaining means for retaining a pooper scooper device at least partially within the chamber (A511). The holder (A504a) is configured to retain the pooper scooper, such that the handle of the pooper scooper (i.e. the part of the pooper scooper which is held by the operator during use) is readily accessible, and the faeces engaging element(s) of the pooper scooper are housed within the chamber. The handle of the pooper scooper may be readily accessible by being at least partially outside the chamber (A511). For example, the handle may be entirely outside the chamber (A511). The retractable dog leash (A502) further comprises a locking mechanism or brake (A512), which enables the user to control the length of the leash (A508)

In the embodiment shown in **Figure 12****,** the retaining means comprises abutments (A514) which frictionally engage with a pooper scooper device to retain said pooper scooper device at least partially within the chamber (A511). Suitably, the chamber is not a closed cavity, within which the pooper scooper device is retained, which requires opening to gain access to a pooper scooper device retained within the chamber. Advantageously, a pooper scooper device may be retained within the chamber (A511) such that the portion of the pooper scooper device which the operator holds during use, i.e. the handle of the pooper scooper device, is accessible outside the chamber, thereby providing the operator with easy access to the pooper scooper, without the need to open the chamber for example.

In another embodiment, the retaining means may engage with engaging means of a pooper scooper device. For example, the holder (A504a) may comprise projections which interfit with one or more windows (112) defined in the opposing leaves (3a, 3b) of a pooper scooper device, as for example shown in **Figure** 9b.

In the embodiment shown in **Figure 12****,** the holder (A504a) is partially cylindrical, however, the skilled person will appreciate that alternative configurations would be equally suitable. Advantageously, the holder is configured such that the faeces engaging part of a pooper scooper device fits snugly into the holder (A504a), and the handle of the pooper scooper device remains accessible outside the chamber (A511) when a pooper scooper device is retained therein.

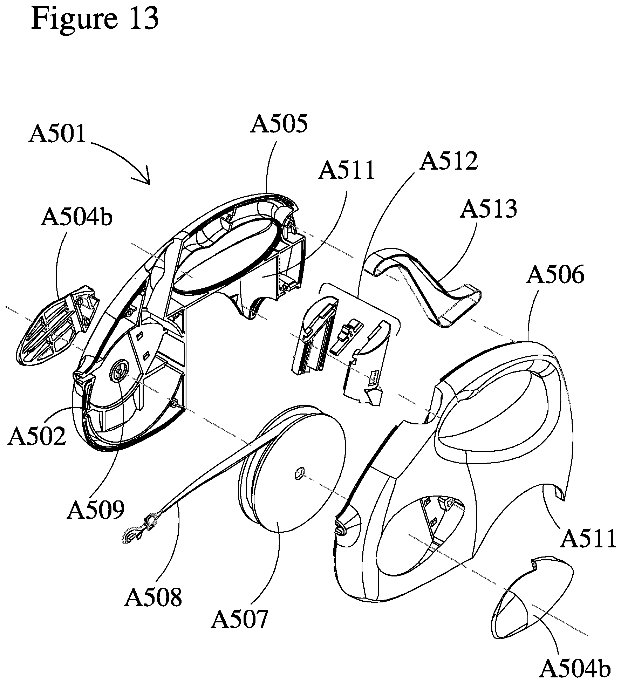

**Figure 13** shows the dog leash assembly (A501) according to the invention in a disassembled state. The dog leash assembly (A501) is a retractable dog leash (A502) assembly. The dog leash assembly (A501) comprises a dog leash housing comprising a body having a first part (A505) and a second part (A506). The dog leash housing comprises engaging means for securing a dog leash to said housing. The dog leash assembly comprises a spool (A507) with a leash (A508) wound thereon which is rotatably mounted within the body of the dog leash housing. Each of the first and second parts may be formed for example by moulding, such as injection moulding. The spool (A507) comprises a retraction mechanism (not shown) such as an internal spring which can be tensioned on a spool holder (A509). The first part (A505) and second part (A506) can be assembled together with the spool (A507) housed therein on the spool holder (A509) and said first and second parts can be fixed together using fixing means, for example screws may be used. In the embodiment shown, each of the first part (A505) and second part (A506) comprise a chamber (A511). When the first and second parts are assembled to form the dog leash assembly, the chamber (A511) of the first part and that of the second part form a holder (A504a) in which a pooper scooper device may be retained, for example by retaining means (not shown). Clips (A504b) are biased against the body and function as bag holders. The retractable dog leash (A502) further comprises a locking mechanism (A512), which enables the user to control the length of the leash (A508) which is unwound from the spool (A507) and thereby control the distance between a tethered animal and the operator holding the dog leash assembly.

The dog leash may be formed of a reflective material.

The dog leash housing may comprise a torch.

Advantageously, the co-operation between the end regions of the opposing leaves of the pooper scooper device, facilitates storage of the faeces engaging elements of the pooper scooper device in a smaller chamber, than was possible for prior art pooper scooper devices.

The present invention represents an advancement on the pooper scooper devices described in the prior art. The present invention provides a pooper scooper device which facilitates improved collection of faecal deposits from a wide variety of ground surfaces, particularly from challenging ground surfaces such as from long/deep grass. Furthermore, the present invention provides a pooper scooper device which can be stored more readily, and the present invention further provides a dog leash assembly for housing a pooper scooper device as described herein, and a dog leash assembly comprising a pooper scooper device as described herein.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination. The scope of the invention is defined in the appended patent claims.

### Reference numerals:

| **Figure/reference numeral** | **Feature** |
|---|---|
| Figure 1a | |
| 111 | pooper scooper device |
| 22 | housing |
| 33a | (first) opposing leaf |
| 33b | (second) opposing leaf |
| 55 | channel |
| 44 | intermediate leaf |
| | |

| Figure 1b | |
|---|---|
| 111x | closed position |
| V1d | vertical distance between intermediate leaf and opposing leaves |
| | |

| Figure 2a | |
|---|---|
| 101 | pooper scooper device |
| 2 | housing |
| 2a | stops |
| 3a | first opposing leaf |
| 3b | second opposing leaf |
| 19a | |
| 301a | slot or channel |
| 301b | at least part of the terminal region of the second opposing leaf |
| 101x | closed position |
| 302a | opposing wall |
| 302b | opposing wall |
| 501 | cavity |
| 502a | inner surface |
| 502b | outer surface |
| | |

| Figure 2b | |
|---|---|
| 4d | baffle |
| 13 | actuating member |
| 14a | channel for receiving operator's digits |
| | |

| Figure 2c | |
|---|---|
| β1 | width of opposing wall (302a) |
| β2 | width of opposing wall (302b) |
| β3 | width of at least part of the terminal region of the second opposing leaf (301b) |
| α1 | wall thickness of first opposing leaf |
| α2 | wall thickness of opposing wall |
| α3 | gap height |
| α4 | wall thickness of second opposing leaf |
| | |

| Figure 3a | |
|---|---|
| 4a | terminal region of intermediate leaf |
| 4b | edge of terminal region of intermediate leaf |
| | |

| Figure 3b | |
|---|---|
| Vd | vertical distance between edge of intermediate leaf and overlapped end regions of |
| 1001x | closed position |
| | |

| Figure 3c | |
|---|---|
| | |
| | |
| | |
| | |

| Figure 4 | |
|---|---|
| 302c | end wall |
| | |

| Figure 5a | |
|---|---|
| 201 | pooper scooper device |
| 302d | base wall |
| 302e | channel |
| 303 | edge of terminal region of second opposing leaf |
| | |

| Figure 5b | |
|---|---|
| 201x | closed position |
| 501x | enclosure |
| | |

| Figure 5c | |
|---|---|
| 2001 | pooper scooper device |
| | |

| Figure 6 | |
|---|---|
| 3001 | pooper scooper device |
| 302f | projection or baffle |
| | |

| Figure 7a | |
|---|---|
| 1001 | pooper scooper device |
| X | longitudinal axis |
| Y | transverse axis |
| 7 | roll of bags |
| 8 | opening |
| 9 | flange |
| 10 | dispensing aid |
| 10a | cap |
| 10b | deflection tab |
| | |

| Figure 7b | |
|---|---|
| 2500 | Pooper scooper device |
| X | Longitudinal axis |
| Y | Transverse axis |
| 3a | First opposing leaf |
| 3b | Second opposing leaf |
| 251a | deflector |
| 251b | deflector |
| 501 | cavity |
| 301a | Channel |
| 302a | Opposing wall (terminal region of first opposing leaf) |
| 302b | Opposing wall |
| 252 | groove |
| 303 | Edge of the second opposing leaf |
| 253 | dividing wall |
| 254a-c | teeth |
| | |

| Figure 8a-8f | |
|---|---|
| 16 | bag |
| 17 | faeces |
| 1001a | opening direction |
| 19b | open position |
| | |

| Figure 8g-8k | |
|---|---|
| 101x | Closed position |
| 501x | Volume of enclosure |
| 501 | Cavity |
| 256 | grass |
| | |
| | |
| | |
| | |

| Figure 9a-9h | |
|---|---|
| 10c | annular groove |
| 12 | gripper |
| 12a | detents |
| 12b | mandrel or stem |
| 112 | window |
| | |

| Figure 10 | |
|---|---|
| A101 | dog leash assembly |
| A102 | retractable dog leash |
| A103 | handle |
| A104a | holder |
| A104b | bag holder |
| A108 | dog leash |
| A101x | dog leash housing |
| A101y | body |
| | |

| Figure 11 | |
|---|---|
| A501 | dog leash assembly |
| A5001 | dog leash housing |
| A501a | body |
| A502 | retractable dog leash |
| A503 | handle |
| A504a | holder |
| A504b | bag holder |
| A508 | dog leash |
| A512 | locking mechanism/brake |
| A513 | strap |
| | |

| Figure 12 | |
|---|---|
| A511 | chamber |
| A514 | abutment |
| A521 | first end |
| A522 | second end |
| A523 | sidewalls |
| | |

| Figure 13 | |
|---|---|
| A505 | first part |
| A506 | second part |
| A507 | spool |
| A509 | spool holder |

## Claims

1. A pooper scooper device (1001) comprising:
two opposing leaves (3a, 3b), said opposing leaves comprising a first opposing leaf (3a) and a second opposing leaf (3b)
each of said leaves having a terminal region,
wherein at least part of the terminal region of the first opposing leaf comprises a channel (301a) for receiving at least part of the terminal region of the second opposing leaf (301b),
wherein said channel (301a) is defined by two opposing walls (302a, 302b), wherein at least a part of the terminal region of the first opposing leaf forms one of the two opposing walls, wherein the two opposing walls are connected by end walls (302c),
wherein each of the first and second opposing leaves (3a, 3b) have inner surfaces (502a) and outer surfaces (502b), and wherein the channel (301a) on the first opposing leaf (3a) is on the inner surface (502a) of the first opposing leaf (3a);
said opposing leaves being moveable relative to each other to move apart in an opening direction and to move towards each other in a closing direction,
wherein at least part of the terminal region of the first opposing leaf overlaps with at least part of the terminal region of the second opposing leaf, when said opposing leaves are biased towards each other to a closed position; and
wherein at least part of the terminal region of the second opposing leaf is received in the channel (301a) of the first opposing leaf when said opposing leaves are biased towards each other to a closed position.

2. The pooper scooper device according to claim 1, wherein the at least a part of the terminal region of the second opposing leaf (3b) forms a clearance fit or transition fit with the channel (301a) of the first opposing leaf.

3. The pooper scooper device according to claim 1, wherein the channel (301a) on the first opposing leaf (3a) is defined by two opposing walls and a base (302d).

4. The pooper scooper device according to any preceding claim, further comprising a pair of actuating members (13) coupled to said opposing leaves (3a, 3b) for reversibly displacing said opposing leaves from a first position to a second position, optionally,
wherein the actuating members (13) comprise digit receptacles defined in each of the opposing leaves.

5. The pooper scooper device according to any preceding claim, further comprising a housing (2) for storing a plurality of disposable bags.

6. The pooper scooper device according to claim 5, wherein the two opposing leaves (3a, 3b) extend from said housing (2).

7. The pooper scooper device according to claim 4 or 5, further comprising at least one intermediate leaf (4) extending from the housing (2), wherein said intermediate leaf defines channels (5) between the opposing leaves.

8. The pooper scooper device according to any preceding claim, further comprising at least one deflector (251a, 251b), such as a deflector plate or deflector baffle, projecting from an inner surface of at least one of the two opposing leaves,
optionally, wherein at least one deflector projecting (251a) from the inner surface of the first opposing leaf (3a) is vertically offset from at least one deflector (251b) projecting from the inner surface of the second opposing leaf (3b).

9. The pooper scooper device according to any preceding claims, further comprising a groove (252) defined in the second opposing leaf (3b) and a corresponding dividing wall (253) defined in the channel (301a) of the first opposing leaf (3a), said dividing wall (253) extending between the two opposing walls (302a, 302b) of said channel, wherein said dividing wall (253) is receivable in said groove (252) when the opposing leaves are biased towards each other to a closed position.

10. The pooper scooper device according to claim 9, wherein two grooves (252) are defined in the second opposing leaf (3b), and wherein two corresponding dividing walls (253) are defined in the channel (301a) of the first opposing leaf (3a), said dividing walls (253) extending between the two opposing walls (302a, 302b) of said channel (301a), wherein each of said dividing walls is receivable in its corresponding groove (252) when the opposing leaves are biased towards each other to a closed position.

11. The pooper scooper device according to any preceding claim wherein the housing (2) is substantially cylindrical in cross section and the leaves are circumferentially displaced about the base.

12. A dog leash assembly (A101, A501) comprising a dog leash housing (A101x, A5001) having a dog leash (A108, A508) secured thereto, further comprising a pooper scooper device (1001) according to any preceding claim.

13. The dog leash assembly (A101, A501) according to claim 12, wherein the dog leash assembly comprises a retractable dog leash (A102, A502).

14. The dog leash assembly (A101, A501) according to claim 12 or claim 13, wherein the dog leash housing (A101x) comprises a body (A501a), a handle (A503) and engaging means for securing a dog leash (A508) to said housing, said body comprising a holder (A504a) for the pooper scooper device according to any one of claim 1 to 11.

15. The dog leash assembly according to claim 14, wherein the holder (A504a) comprises a chamber (A511) and retaining means for retaining the pooper scooper device at least partially within the chamber such that faeces engaging elements of the pooper scooper device are housed within the chamber (A511), and a handle of the pooper scooper device remains at least partially outside the chamber.

## Patentansprüche

1. Kotschaufelvorrichtung (1001), umfassend:
zwei gegenüberliegende Blätter (3a, 3b), wobei die gegenüberliegenden Blätter ein erstes gegenüberliegendes Blatt (3a) und ein zweites gegenüberliegendes Blatt (3b) umfassen wobei jedes der Blätter einen Endbereich aufweist,
wobei mindestens ein Teil des Endbereichs des ersten gegenüberliegenden Blattes einen Kanal (301a) zur Aufnahme mindestens eines Teils des Endbereichs des zweiten gegenüberliegenden Blattes (301b) umfasst,
wobei der Kanal (301a) durch zwei gegenüberliegende Wände (302a, 302b) definiert ist, wobei mindestens ein Teil des Endbereichs des ersten gegenüberliegenden Blattes eine der beiden gegenüberliegenden Wände bildet, wobei die beiden gegenüberliegenden Wände durch Endwände (302c) verbunden sind, wobei jedes von dem ersten und dem zweiten gegenüberliegenden Blatt (3a, 3b) Innenflächen (502a) und Außenflächen (502b) aufweist und wobei sich der Kanal (301a) an dem ersten gegenüberliegenden Blatt (3a) an der Innenfläche (502a) des ersten gegenüberliegenden Blattes (3a) befindet;
wobei die gegenüberliegenden Blätter relativ zueinander beweglich sind, um sich in einer Öffnungsrichtung voneinander wegzubewegen und sich in einer Schließrichtung aufeinanderzubewegen,
wobei mindestens ein Teil des Endbereichs des ersten gegenüberliegenden Blattes mit mindestens einem Teil des Endbereichs des zweiten gegenüberliegenden Blattes überlappt, wenn die gegenüberliegenden Blätter in eine geschlossene Position zueinander vorgespannt sind; und
wobei mindestens ein Teil des Endbereichs des zweiten gegenüberliegenden Blattes in dem Kanal (301a) des ersten gegenüberliegenden Blattes aufgenommen ist, wenn die gegenüberliegenden Blätter in eine geschlossene Position zueinander vorgespannt sind.

2. Kotschaufelvorrichtung nach Anspruch 1, wobei der mindestens eine Teil des Endbereichs des zweiten gegenüberliegenden Blattes (3b) eine Spielpassung oder Übergangspassung mit dem Kanal (301a) des ersten gegenüberliegenden Blattes bildet.

3. Kotschaufelvorrichtung nach Anspruch 1, wobei der Kanal (301a) an dem ersten gegenüberliegenden Blatt (3a) durch zwei gegenüberliegende Wände und einen Boden (302d) definiert ist.

4. Kotschaufelvorrichtung nach einem der vorhergehenden Ansprüche, ferner umfassend ein Paar von Betätigungsgliedern (13), die mit den gegenüberliegenden Blättern (3a, 3b) gekoppelt sind, um die gegenüberliegenden Blätter reversibel von einer ersten Position in eine zweite Position zu verlagern, optional, wobei die Betätigungsglieder (13) Fingeraufnahmen umfassen, die in jedem der gegenüberliegenden Blätter definiert sind.

5. Kotschaufelvorrichtung nach einem der vorhergehenden Ansprüche, ferner umfassend ein Gehäuse (2) zum Aufbewahren einer Mehrzahl von Einwegbeuteln.

6. Kotschaufelvorrichtung nach Anspruch 5, wobei sich die beiden gegenüberliegenden Blätter (3a, 3b) von dem Gehäuse (2) aus erstrecken.

7. Kotschaufelvorrichtung nach Anspruch 4 oder 5, ferner umfassend mindestens ein Zwischenblatt (4), das sich von dem Gehäuse (2) aus erstreckt, wobei das Zwischenblatt Kanäle (5) zwischen den gegenüberliegenden Blättern definiert.

8. Kotschaufelvorrichtung nach einem der vorhergehenden Ansprüche, ferner umfassend mindestens einen Ablenker (251a, 251b), wie etwa eine Ablenkplatte oder eine Ablenkblende, der von einer Innenfläche mindestens eines der beiden gegenüberliegenden Blätter vorsteht,
optional, wobei mindestens ein Ablenker (251a), der von der Innenfläche des ersten gegenüberliegenden Blattes (3a) vorsteht, vertikal gegenüber mindestens einem Ablenker (251b) versetzt ist, der von der Innenfläche des zweiten gegenüberliegenden Blattes (3b) vorsteht.

9. Kotschaufelvorrichtung nach einem der vorhergehenden Ansprüche, ferner umfassend eine in dem zweiten gegenüberliegenden Blatt (3b) definierte Nut (252) und eine entsprechende Trennwand (253), die in dem Kanal (301a) des ersten gegenüberliegenden Blattes (3a) definiert ist, wobei sich die Trennwand (253) zwischen den beiden gegenüberliegenden Wänden (302a, 302b) des Kanals erstreckt, wobei die Trennwand (253) in der Nut (252) aufnehmbar ist, wenn die gegenüberliegenden Blätter in eine geschlossene Position zueinander vorgespannt sind.

10. Kotschaufelvorrichtung nach Anspruch 9, wobei zwei Nuten (252) in dem zweiten gegenüberliegenden Blatt (3b) definiert sind und wobei zwei entsprechende Trennwände (253) in dem Kanal (301a) des ersten gegenüberliegenden Blattes (3a) definiert sind, wobei sich die Trennwände (253) zwischen den beiden gegenüberliegenden Wänden (302a, 302b) des Kanals (301a) erstrecken, wobei jede der Trennwände in ihrer entsprechenden Nut (252) aufnehmbar ist, wenn die gegenüberliegenden Blätter in eine geschlossene Position zueinander vorgespannt sind.

11. Kotschaufelvorrichtung nach einem der vorhergehenden Ansprüche, wobei das Gehäuse (2) im Querschnitt im Wesentlichen zylindrisch ist und die Blätter in Umfangsrichtung um den Boden versetzt sind.

12. Hundeleinenbaugruppe (A101, A501), umfassend ein Hundeleinengehäuse (A101x, A5001), an dem eine Hundeleine (A108, A508) befestigt ist, ferner umfassend eine Kotschaufelvorrichtung (1001) nach einem der vorhergehenden Ansprüche.

13. Hundeleinenbaugruppe (A101, A501) nach Anspruch 12, wobei die Hundeleinenbaugruppe eine einziehbare Hundeleine (A102, A502) umfasst.

14. Hundeleinenbaugruppe (A101, A501) nach Anspruch 12 oder Anspruch 13, wobei das Hundeleinengehäuse (A101x) einen Körper (A501a), einen Griff (A503) und Eingriffsmittel zum Befestigen einer Hundeleine (A508) an dem Gehäuse umfasst, wobei der Körper einen Halter (A504a) für die Kotschaufelvorrichtung nach einem der Ansprüche 1-11 umfasst.

15. Hundeleinenbaugruppe nach Anspruch 14, wobei der Halter (A504a) eine Kammer (A511) und Haltemittel zum Halten der Kotschaufelvorrichtung zumindest teilweise innerhalb der Kammer umfasst, sodass Koteingriffselemente der Kotschaufelvorrichtung innerhalb der Kammer (A511) untergebracht sind und ein Griff der Kotschaufelvorrichtung zumindest teilweise außerhalb der Kammer verbleibt.

## Revendications

1. Dispositif de ramassage de crottes (1001) comprenant :
deux feuilles opposées (3a, 3b), lesdites feuilles opposées comprenant une première feuille opposée (3a) et une seconde feuille opposée (3b)
chacune desdites feuilles ayant une région terminale,
dans lequel au moins une partie de la région terminale de la première feuille opposée comprend un canal (301a) destiné à recevoir au moins une partie de la région terminale de la seconde feuille opposée (301b),
dans lequel ledit canal (301a) est défini par deux parois opposées (302a, 302b), dans lequel au moins une partie de la région terminale de la première feuille opposée forme l'une des deux parois opposées, dans lequel les deux parois opposées sont reliées par des parois d'extrémité (302c),
dans lequel chacune de la première et de la seconde feuilles opposées (3a, 3b) possède des surfaces intérieures (502a) et des surfaces extérieures (502b), et dans lequel le canal (301a) sur la première feuille opposée (3a) se trouve sur la surface intérieure (502a) de la première feuille opposée (3a) ;
lesdites feuilles opposées étant mobiles l'une par rapport à l'autre pour s'écarter dans une direction d'ouverture et se rapprocher l'une de l'autre dans une direction de fermeture, dans lequel au moins une partie de la région terminale de la première feuille opposée chevauche au moins une partie de la région terminale de la seconde feuille opposée, lorsque lesdites feuilles opposées sont repliées l'une vers l'autre en position fermée ; et
dans lequel au moins une partie de la région terminale de la seconde feuille opposée est reçue dans le canal (301a) de la première feuille opposée lorsque lesdites feuilles opposées sont repliées l'une vers l'autre dans une position fermée.

2. Dispositif de ramassage de crottes selon la revendication 1, dans lequel la au moins une partie de la région terminale de la seconde feuille opposée (3b) forme un ajustement de jeu ou un ajustement de transition avec le canal (301a) de la première feuille opposée.

3. Dispositif de ramassage de crottes selon la revendication 1, dans lequel le canal (301a) sur la première feuille opposée (3a) est défini par deux parois opposées et une base (302d).

4. Dispositif de ramassage de crottes selon une quelconque revendication précédente comprenant en outre une paire d'éléments d'actionnement (13) couplée auxdites feuilles opposées (3a, 3b) pour déplacer de manière réversible lesdites feuilles opposées d'une première position à une seconde position, éventuellement,
dans lequel les éléments d'actionnement (13) comprennent des réceptacles de doigts définis dans chacune des feuilles opposées.

5. Dispositif de ramassage de crottes selon une quelconque revendication précédente, comprenant en outre un boîtier (2) pour stocker une pluralité de sacs jetables.

6. Dispositif de ramassage de crottes selon la revendication 5, dans lequel les deux feuilles opposées (3a, 3b) s'étendent à partir dudit boîtier (2).

7. Dispositif de ramassage de crottes selon la revendication 4 ou 5, comprenant en outre au moins une feuille intermédiaire (4) s'étendant à partir du boîtier (2), dans lequel ladite feuille intermédiaire définit des canaux (5) entre les feuilles opposées.

8. Dispositif de ramassage de crottes selon une quelconque revendication précédente, comprenant en outre au moins un déflecteur (251a, 251b), tel qu'une plaque déflectrice ou un déflecteur, faisant saillie d'une surface intérieure d'au moins l'une des deux feuilles opposées,
éventuellement, dans lequel au moins un déflecteur faisant saillie (251a) de la surface intérieure de la première feuille opposée (3a) est décalé verticalement d'au moins un déflecteur (251b) faisant saillie de la surface intérieure de la seconde feuille opposée (3b).

9. Dispositif de ramassage de crottes selon l'une quelconque des revendications précédentes, comprenant en outre une rainure (252) définie dans la seconde feuille opposée (3b) et une paroi de séparation correspondante (253) définie dans le canal (301a) de la première feuille opposée (3a), ladite paroi de séparation (253) s'étendant entre les deux parois opposées (302a, 302b) dudit canal, dans lequel ladite paroi de séparation (253) est recevable dans ladite rainure (252) lorsque les feuilles opposées sont repliées l'une vers l'autre en position fermée.

10. Dispositif de ramassage de crottes selon la revendication 9, dans lequel deux rainures (252) sont définies dans la seconde feuille opposée (3b), et dans lequel deux parois de séparation correspondantes (253) sont définies dans le canal (301a) de la première feuille opposée (3a), lesdites parois de séparation (253) s'étendant entre les deux parois opposées (302a, 302b) dudit canal (301a), dans lequel chacune desdites parois de séparation est recevable dans sa rainure correspondante (252) lorsque les feuilles opposées sont repliées l'une vers l'autre en position fermée.

11. Dispositif de ramassage de crottes selon une quelconque revendication précédente, dans lequel le boîtier (2) a une section sensiblement cylindrique et les feuilles sont déplacées circonférentiellement autour de la base.

12. Ensemble de laisse pour chien (A101, A501) comprenant un boîtier de laisse pour chien (A101x, A5001) auquel est fixée une laisse pour chien (A108, A508), comprenant en outre un dispositif de ramassage de crottes (1001) selon une quelconque revendication précédente.

13. Ensemble de laisse pour chien (A101, A501) selon la revendication 12, dans lequel l'ensemble de laisse pour chien comprend une laisse rétractable pour chien (A102, A502).

14. Ensemble de laisse pour chien (A101, A501) selon la revendication 12 ou la revendication 13, dans lequel le boîtier de laisse pour chien (A101x) comprend un corps (A501a), une poignée (A503) et un moyen d'engagement pour fixer une laisse pour chien (A508) audit boîtier, ledit corps comprenant un support (A504a) pour le dispositif de ramassage de crottes selon l'une quelconque des revendications 1 à 11.

15. Ensemble de laisse pour chien selon la revendication 14, dans lequel le support (A504a) comprend une chambre (A511) et des moyens de retenue pour maintenir le dispositif de ramassage de crottes au moins partiellement à l'intérieur de la chambre, de sorte que les éléments en contact avec les excréments du dispositif de ramassage de crottes soient logés à l'intérieur de la chambre (A511), et qu'une poignée du dispositif de ramassage de crottes reste au moins partiellement à l'extérieur de la chambre.
